# FASCICULE DE BREVET EUROPEEN

(11) **EP 3 546 423 B1**
(45) Date de publication et mention de la délivrance du brevet: **06.01.2021**
(21) Numéro de dépôt: 19165412.8
(22) Date de dépôt: 27.03.2019
(51) Int. Cl.: C01B 25/24, B01J 8/02, C08G 79/04, B01J 19/30

(54) **PROCÉDÉ DE PRODUCTION D'ACIDE POLYPHOSPHORIQUE ET DISPOSITIF POUR UN TEL PROCÉDÉ**
HERSTELLUNGSVERFAHREN VON POLYPHOSPHORSÄURE, UND VORRICHTUNG FÜR DIESES VERFAHREN
METHOD OF PRODUCING POLYPHOSPHORIC ACID AND DEVICE FOR SUCH A METHOD

(30) Priorité: 30.03.2018 BE 201805218
(43) Date de publication de la demande: 02.10.2019
(73) Titulaire: Prayon, 4480 Engis (BE)
(72) Inventeur: HEPTIA, Bernard, 4480 Engis (BE); GABRIEL, Damien, 4480 Engis (BE); LERUTH, Denis, 4480 Engis (BE)
(74) Mandataire: Connor, Marco Tom

(56) Documents cités:
- EP-B1- 1 421 030
- EP-B1- 2 411 325
- US-A- 3 272 597

## Description

### DOMAINE DE L'INVENTION

La présente invention se rapporte à un procédé et à un dispositif de production d'acide polyphosphorique à partir de solutions d'acide phosphorique. Le procédé de la présente invention est particulièrement efficace et permet, d'une part, de produire des solutions d'acide polyphosphorique à des concentrations supérieures à celles actuellement disponibles sur le marché et, d'autre part, de baisser la consommation énergétique nécessaire à la production de solutions d'acide polyphosphorique à des concentrations comparables à celles actuellement disponibles sur le marché. La présente invention permet également une meilleure gestion des gaz de combustion produits par le procédé avant leur évacuation dans l'atmosphère.

### ARRIERE-PLAN TECHNOLOGIQUE

L'acide polyphosphorique (= PPA) est un liquide visqueux produit notamment à partir d'acide phosphorique. Il trouve des applications comme agent de déshydratation dans le secteur de la chimie fine ou des polymères de l'industrie pharmaceutique, la pétrochimie, la fabrication de produits chimiques agricoles. Le PPA a la formule générale HO[P(OH)(O)O]ₙH, avec n > 1. Lorsque n = 2 le PPA est appelé acide pyrophosphorique ; lorsque n = 3, on parle d'acide tripolyphosphorique. Pour n > 3, on parle simplement d'acide polyphosphorique, indépendamment de la valeur de n. Le PPA est produit par une déshydratation et polycondensation de l'acide orthophosphorique, H₃PO₄, selon la réaction (1). On obtient ainsi une solution aqueuse d'acide polyphosphorique dont la distribution en poids moléculaire dépend entre autres de la température de polycondensation, Tpc.

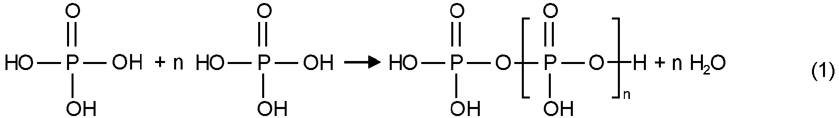

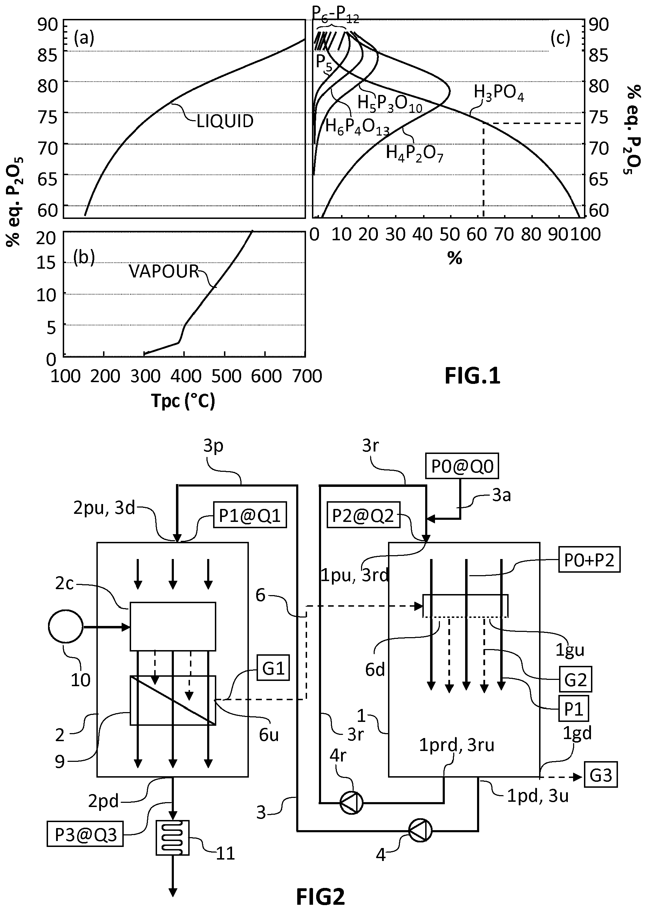

L'acide polyphosphorique se présente le plus souvent sous forme de chaines linéaires. Des formes cycliques de type métaphosphorique ou ramifiées peuvent cependant également exister. Comme illustré à la Figure 1, la température de polycondensation détermine la concentration en acide phosphorique équivalente en unités P₂O₅ à l'équilibre à l'état liquide et, cette dernière détermine la distribution en poids moléculaire (i.e., la distribution de l'acide phosphorique sous différentes formes de valeur n différente). Ainsi, une solution aqueuse d'acide phosphorique à concentration équivalente en unités P₂O₅ inférieure à environ 61% sera constituée sensiblement d'une solution d'acide orthophosphorique (= H₃PO₄) uniquement. Lorsque la concentration équivalente en unités P₂O₅ augmente, cela indique que la solution comprend de plus en plus de molécules polymérisées, la valeur de n augmentant avec la concentration en équivalents

La déshydratation et polycondensation d'une solution d'acide phosphorique en acide polyphosphorique requiert une évaporation de molécules d'eau qui nécessite l'apport d'énergie calorifique. Le brevet EP2411325 B1 passe en revue un certain nombre de procédés connus de production d'acide polyphosphorique de l'art et décrit un procédé par voie humide nouveau par rapport aux procédés revus permettant de bénéficier d'une grande efficacité énergétique, de limiter de façon drastique l'impact environnemental, Ce brevet décrit un dispositif résistant aux conditions opératoires très sévères de production d'acide polyphosphorique, permettant de limiter les coûts d'entretien et d'instaurer une durabilité d'équipement et enfin d'assurer la production d'un acide polyphosphorique de qualité sans contamination lors du procédé de fabrication.

Le procédé décrit dans le brevet EP2411325 B1 comprend :
- une étape de pulvérisation d'une solution d'alimentation d'acide phosphorique dans une flamme située dans une partie supérieure d'une chambre de combustion afin de former une solution d'acide polyphosphorique par polycondensation accompagnée de formation de gaz de combustion chauds,
- une étape de séparation de la solution d'acide polyphosphorique et des gaz de combustion chauds, et
- de manière optionnelle, une étape de mise en contact dans un contacteur gaz-acide des gaz chauds ainsi séparés avec la solution d'alimentation d'acide phosphorique avant l'étape de pulvérisation de celle-ci dans la flamme.

Plusieurs avantages découlent de l'étape de mise en contact dans le contacteur gaz-acide des gaz chauds avec la solution d'alimentation d'acide phosphorique. Tout d'abord, la solution d'alimentation d'acide phosphorique est ainsi préchauffée et concentrée par évaporation d'eau de la solution avant l'étape de pulvérisation dans la flamme, ce qui diminue considérablement les besoins énergétiques lors de la polycondensation dans la chambre de combustion. Ensuite, les gaz de combustion peuvent contenir des gouttelettes ou vapeurs d'acide phosphorique qui, par échange lors du contact avec la solution d'alimentation d'acide phosphorique, permettent d'augmenter la concentration en P₂O₅ et de former ainsi une solution d'acide phosphorique enrichi avant l'étape de pulvérisation. Il est entendu par les termes « solution d'acide phosphorique enrichi » une solution d'acide phosphorique qui comprend entre 5 et 80% P₂O₅. Enfin, l'étape de mise en contact contribue à la diminution de la température des gaz de combustion avant leur évacuation.

La présente invention constitue une amélioration du procédé décrit dans EP2411325 B1 maintenant les avantages obtenus par ce procédé tout en augmentant sensiblement le rendement et diminuant la consommation énergétique. De plus, le procédé de la présente invention permet de produire des solutions d'acide polyphosphorique à des concentrations et une pureté jamais atteintes à ce jour, avec des concentrations en P₂O₅largement supérieures à 86% P₂O₅. La présente invention et ses avantages sont décrits plus en détails dans les sections suivantes.

### RESUME DE L'INVENTION

La présente invention est décrite dans les revendications indépendantes ci-jointes. Des variantes préférées sont définies dans les revendications dépendantes. En particulier, la présente invention concerne un procédé de production d'acide polyphosphorique P3 comprenant les étapes suivantes :
(a) introduire dans un contacteur gaz-acide, un flux d'alimentation de solution d'alimentation d'acide phosphorique et comprenant au moins 40% P₂O₅, de préférence au moins 50%, de préférence au moins 54%, encore de préférence au moins 58% ou même au moins 60% P₂O₅,
(b) introduire dans le contacteur gaz-acide, un flux de recirculation de solution d'acide phosphorique enrichi recirculé,
(c) introduire dans le contacteur gaz-acide des gaz de combustion ;
(d) contacter les flux d'alimentation et de recirculation et les gaz de combustion pour former, d'une part, une solution d'acide phosphorique enrichi et, d'autre part, des gaz de combustion contactés,
   - séparer les gaz de combustion contactés de la solution d'acide phosphorique enrichi,
   - évacuer les gaz de combustion contactés du contacteur gaz-acide, et
   - sortir la solution d'acide phosphorique enrichi du contacteur gaz-acide,
(e) former à partir de ladite solution d'acide phosphorique enrichi, d'une part,
   - un flux de recirculation de solution d'acide phosphorique enrichi recirculé pour l'introduire dans le contacteur gaz-acide tel que défini à l'étape (b) et, d'autre part,
   - un flux de pulvérisation de la solution d'acide phosphorique enrichi pour l'introduire dans une chambre de combustion,
(f) pulvériser la solution d'acide phosphorique enrichi à travers une flamme brûlant dans la partie supérieure de la chambre de combustion pour :
   - évaporer de l'eau et ainsi concentrer la solution d'acide phosphorique enrichi,
   - polymériser les molécules de la solution d'acide phosphorique enrichi pour former de l'acide polyphosphorique et
   - former des gaz de combustion,
(g) séparer l'acide polyphosphorique des gaz de combustion et
   - récupérer l'acide polyphosphorique, et
   - transférer les gaz de combustion dans le contacteur gaz-acide tel que défini à l'étape (c),

Dans une variante de l'invention, les flux d'alimentation et de recirculation sont mélangés avant leur introduction dans le contacteur gaz-acide pour former un flux d'un mélange de la solution d'alimentation d'acide phosphorique et de la solution d'acide phosphorique enrichi recirculé. Dans une variante alternative, les flux d'alimentation et de recirculation ne sont contactés qu'après avoir été introduits séparément dans le contacteur gaz-acide pour former un flux d'un mélange de la solution d'alimentation d'acide phosphorique et de la solution d'acide phosphorique enrichi recirculé.

La solution d'acide phosphorique enrichi et la solution d'acide phosphorique enrichi recirculé sont identiques et comprennent une concentration en unité de P₂O₅ plus élevée que celle de la solution d'alimentation d'acide phosphorique P0. Par exemple, leur teneur en P₂O₅ peut être supérieure ou égale à 50%, de préférence supérieure ou égale à 54%, encore de préférence supérieure à 62%, de préférence supérieure à 70%, et encore de préférence comprise entre 71 et 80%, et de préférence entre 72 et 76%.

Le contact entre les flux d'alimentation et de recirculation et les gaz de combustion à l'étape (d) s'effectue de préférence à co-courant ou à contre-courant. Dans une variante préférée, le contact se fait à co-courant en s'écoulant depuis une partie supérieure vers un partie inférieure du contacteur gaz-acide, ensuivant le sens du vecteur de gravité.

Dans un état stationnaire de production, un rapport, Q1 / (Q1 + Q2), entre un débit massique Q1 du flux de pulvérisation et un débit massique total (Q1 + Q2) de la somme des flux de pulvérisation et de recirculation est de préférence inférieur à 50%, de préférence inférieur à 10%, de préférence inférieur à 5%, encore de préférence inférieur à 2.5% et dans lequel le rapport Q1 / (Q1 + Q2) est supérieur à 0.1%, de préférence supérieur à 0.5%.

Au cours de l'étape (d) de contact, un rapport (Qg1 / (Q0+Q2)) entre un débit massique Qg1 du gaz de combustion introduit dans le contacteur gaz-acide et un débit massique total (Q0 + Q2) des flux d'alimentation et de recirculation introduits dans le contacteur gaz-acide, est compris entre 0.1 et 50%, de préférence entre 0.5 et 10%, encore de préférence entre 1 et 7%. Ce rapport distingue le procédé de la présente invention du procédé décrit dans le brevet EP2411325 B1 dans lequel Q2 = 0 et a donc une valeur sensiblement supérieure.

L'acide polyphosphorique ainsi produit comprend une valeur d'équivalents en unités de P₂O₅ plus élevée que celle de la solution d'acide phosphorique enrichi, et est de préférence supérieure à 76%, de préférence supérieure à 80%, particulièrement de préférence supérieur à 88%, ou est de préférence comprise entre 76 et 90%, encore de préférence entre 86 et 88%.

La présente invention concerne aussi un dispositif de production d'acide polyphosphorique P3 suivant un procédé tel que décrit supra, comprenant :
(A) une chambre de combustion présentant :
   - une entrée d'acide phosphorique enrichi dans la chambre de combustion permettant l'introduction d'une solution d'acide phosphorique enrichi sous forme pulvérisée dans,
   - une unité de combustion agencée dans la partie supérieure de la chambre de combustion, et capable de former une flamme ayant une température d'au moins 1500°C par combustion d'un combustible, ladite unité de combustion comprenant :
      ∘ un brûleur,
      ∘ des connexions fluidiques entre le brûleur et, d'une part, une source d'oxygène et, d'autre part, une source de combustible permettant d'alimenter la flamme,
   - une sortie d'acide polyphosphorique de la chambre de combustion pour récupérer une phase liquide, et agencée en aval de l'unité de combustion qui est elle-même agencée en aval de l'entrée d'acide phosphorique enrichi,
   - une sortie d'évacuation de gaz de combustion issu de la flamme
(B) un contacteur gaz-acide présentant
   - une entrée d'alimentation reliée à une source d'une solution d'alimentation d'acide phosphorique, permettant l'introduction à un débit d'alimentation d'une solution d'alimentation d'acide phosphorique,
   - une entrée de gaz de combustion permettant l'introduction dans le contacteur gaz-acide des gaz de combustion à un débit,
   - une entrée de recirculation identique ou différente de l'entrée d'alimentation, permettant l'introduction d'une solution d'acide phosphorique enrichi recirculé à un débit de recirculation,
   - les entrées d'alimentation et/ou de recirculation et l'entrée de gaz étant agencées pour permettre, d'une part,
      ∘ un contact entre le flux d'alimentation et flux de recirculation pour former un flux d'un mélange de la solution d'alimentation d'acide phosphorique et de la solution d'acide phosphorique enrichi recirculé et, d'autre part
      ∘ un contact du mélange ainsi formé avec les gaz de combustion,
   - une ou plusieurs sorties d'acide phosphorique enrichi,
(C) une connexion fluidique de gaz de combustion reliant une extrémité couplée à la sortie d'évacuation des gaz de combustion de la chambre de combustion, à une extrémité couplée à l'entrée de gaz de combustion dans le contacteur gaz-acide,
(D) une première connexion fluidique de pulvérisation reliant une extrémité couplée
   - à la sortie d'acide phosphorique enrichi du contacteur gaz acide ou
   - à un point d'embranchement avec une première connexion fluidique qui est couplée à la sortie d'acide phosphorique enrichi,
   à une extrémité avale couplée à l'entrée d'acide phosphorique enrichi (2pu) dans la chambre de combustion,
   dans lequel le dispositif comprend en outre
(E) une connexion fluidique de recirculation reliant une extrémité amont couplée,
   - à une sortie d'acide phosphorique enrichi recirculé du contacteur gaz-acide ou
   - à un point d'embranchement avec la première connexion fluidique,
      à une extrémité avale couplée,
   - à l'entrée de recirculation du contacteur gaz-acide ou
   - à une connexion d'alimentation alimentant le contacteur gaz-acide en solution d'alimentation d'acide phosphorique, et
(F) des moyens pour contrôler et maintenir un rapport, Q1 / (Q1 + Q2), entre un débit massique de pulvérisation Q1 s'écoulant dans la connexion fluidique de pulvérisation et un débit massique total (Q1 + Q2) défini comme la somme du débit massique de pulvérisation Q1 et d'un débit massique de recirculation Q2 s'écoulant dans la connexion fluidique de recirculation à une valeur inférieure à 50%, de préférence inférieure à 10%, de préférence inférieure à 5%, encore de préférence inférieure à 2.5% et dans lequel le rapport Q1 / (Q1 + Q2) a une valeur supérieure à 0.1%, de préférence supérieure à 0.5%.

Dans une variante préférée, l'extrémité amont de la connexion fluidique de recirculation est couplée à une sortie d'acide phosphorique enrichi recirculé du contacteur gaz-acide, et les moyens pour contrôler et maintenir le rapport, Q1 / (Q1 + Q2) incluent une pompe agencée sur la connexion fluidique de pulvérisation et ayant une capacité de pompage d'un liquide à un débit de pulvérisation Q1 et une pompe de recirculation agencée sur la connexion fluidique de recirculation et ayant une capacité de pompage d'un liquide à un débit de recirculation.

Dans une variante alternative, les extrémités amont des connexions fluidiques de polycondensation et de recirculation sont couplées à un point d'embranchement avec la première connexion fluidique, et les moyens pour contrôler et maintenir le rapport, Q1 / (Q1 + Q2) incluent :
- une pompe agencée sur la connexion fluidique de pulvérisation et ayant une capacité de pompage d'un liquide à un débit de pulvérisation Q1 et une pompe de recirculation agencée sur la connexion fluidique de recirculation et ayant une capacité de pompage d'un liquide à un débit de recirculation Q2, ou
- une pompe agencée sur la première connexion fluidique et ayant une capacité de pompage d'un liquide à un débit principal (Q1 + Q2) et une vanne à trois voies agencée au point d'embranchement et permettant de diviser le débit principal en un débit de pulvérisation Q1 vers la connexion fluidique de pulvérisation et en un débit de recirculation vers la connexion fluidique de recirculation, ou
- une pompe agencée sur la première connexion fluidique (3) et ayant une capacité de pompage d'un liquide à un débit principal (Q1 + Q2) et des tuyauteries formant les connexions fluidiques de polycondensation et de recirculation situées en aval du point d'embranchement et dimensionnées de sorte à obtenir le rapport Q1 / (Q1 + Q2) désiré.

Le procédé selon la présente invention permet d'obtenir une solution aqueuse d'acide polyphosphorique - comprenant :
- au moins 86% équivalent en unités de P₂O₅, de préférence au moins 87%, encore de préférence au moins 88% équivalent en unités de P₂O₅, et comprenant de préférence pas plus de 92% équivalent en unités P₂O₅,
- pas plus de 100 ppm de SiO₂,
- pas plus de 100 ppm de TOC, et
- de préférence pas plus de 10 ppm Fe,
- de préférence pas plus de 10 ppm Sb, et
- de préférence pas plus de 11 ppm SO₄.
où les concentrations sont exprimées par rapport à la solution aqueuse, y compris l'eau.

### BREVE DESCRIPTION DES FIGURES.

Différents aspects de la présente invention sont illustrés dans les Figures suivantes.
- **Figure 1** :: illustre graphiquement la relation entre la température d'ébullition et la concentration en P₂O₅ à l'équilibre de la phase liquide et de la phase vapeur, ainsi que la relation entre la concentration en P₂O₅ et la distribution de molécules d'acide polyphosphorique de poids moléculaire (ou valeurs de n) différents.
- **Figure 2 :**: illustre une variante de dispositif selon la présente invention.
- **Figure 3 :**: reporte des valeurs d'une sélection de paramètres illustratives du procédé selon la présente invention.
- **Figure 4 :**: illustre une variante de dispositif selon la présente invention.
- **Figure 5 :**: illustre une variante de dispositif selon la présente invention.

### DESCRIPTION DETAILLEE DE L'INVENTION

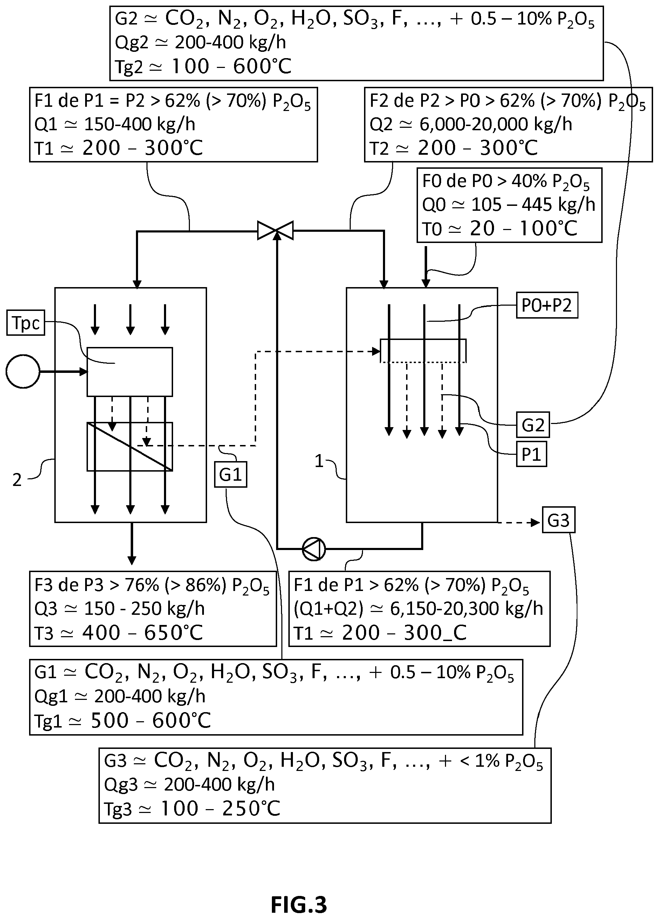

Les Figures 2 à 5 illustrent le procédé et des variantes non exhaustives de dispositifs permettant de mettre en œuvre ledit procédé. Dans la suite, le terme « flux » représenté par la lettre « F » est utilisé dans son interprétation communément acceptée de simplement un écoulement d'un fluide. Seule la Figure 3 indique les flux par la lettre « F ». Les autres Figures illustrant des dispositifs indiquent des débits « Q » correspondant aux flux « F » de la Figure 3. Le terme « débit » représenté par la lettre « Q » caractérise la masse du flux par unité de temps et est exprimé en [kg / s] ou [kg / h]). Le terme « débit », même utilisé seul, définit donc un débit massique.

### Conventions et Définitions

Sauf mention contraire dans ce brevet, le terme concentration est utilisé pour exprimer des concentrations massiques (pourcentages en poids, w/o). Pour définir la teneur en l'espèce qui nous occupe principalement, lorsque l'on parle de concentration des solutions d'acide phosphorique ou autres, il faut entendre la teneur en poids exprimée en unités d'équivalents P₂O₅, que nous écrirons « % eq. P₂O₅ » ou encore « % P₂O₅ ». En ce qui concerne les flux gazeux, comme par exemple les gaz de combustion, où plusieurs espèces d'intérêt peuvent coexister en fonction des conditions opératoires, sous forme gazeuse ou liquide (par exemple par entraînement de gouttelettes), voire éventuellement solide (fumées), la concentration dans ces flux est également exprimée en unités d'équivalents P₂O₅ (en poids, w/o). La dissociation ionique des espèces qui nous intéressent n'est pas considérée dans ce texte. Pour information, la concentration d'une solution d'acide phosphorique peut également être parfois exprimée en unités d'équivalents H₃PO₄. La correspondance entre les deux unités de concentration est définie par la relation : 1 eq. P₂O₅ = 0.7245 eq. H₃PO₄.

Il est entendu dans ce texte par les expressions
- « Solution d'acide phosphorique », une solution aqueuse comprenant du HO[P(OH)(O)O]ₙH, avec n ≥ 1
- « Acide orthophosphorique », une solution aqueuse comprenant très majoritairement du HO[P(OH)(O)O]ₙH, avec n = 1, c'est-à-dire une solution aqueuse d'acide phosphorique contenant moins de 61% en poids de P₂O₅ ;
- « Solution d'acide polyphosphorique » (= PPA), une solution aqueuse comprenant majoritairement du HO[P(OH)(O)O]ₙH, avec n > 1 ; c'est-à-dire une solution aqueuse d'acide phosphorique contenant plus de 76% en poids de P₂O₅;
- « polycondensation de l'acide phosphorique ou orthophosphorique », la polycondensation des molécules considérées telle que représentée par les équations (1) et/ou (2).

### Procédé - contacts gaz-acide

Le procédé de la présente invention comprend l'introduction dans un contacteur gaz-acide (1) des flux suivants :
- un flux d'alimentation, F0, de solution d'alimentation d'acide phosphorique, P0, à un débit d'alimentation, Q0. La solution d'alimentation, P0, comprend au moins 40% équivalent en unités de P₂O₅, de préférence au moins 50%, encore de préférence au moins 54% ou encore de préférence au moins 58% ou même au moins 60% équivalent en unités de P₂O₅. En général, la solution d'alimentation, P0, comprend moins de 62% équivalent en unités de P₂O₅, mais des concentrations plus élevées de la solution d'alimentation ne gênent en rien le procédé. A de telles concentrations, la solution d'alimentation, P0, est constituée principalement d'acide orthophosphorique, H₃PO₄ en solution aqueuse (cf. Figure 1(c)), mais peut contenir des molécules de PPA (n > 1).
- un flux de recirculation F2 de solution d'acide phosphorique enrichi recirculé P2 qui sera défini en détails plus loin.
- Un flux de gaz de combustion G1 qui sont formés lors de la polycondensation d'un flux de solution d'acide phosphorique enrichi P1 dans une chambre de combustion qui seront décrits et discutés en détails plus loin.

Les flux d'alimentation F0 et de recirculation F2 et les gaz de combustion G1 sont mis en contact les uns avec les autres dans le contacteur gaz-acide (on parle donc d'un contacteur gaz-acide direct) pour former, d'une part, une solution d'acide phosphorique enrichi P1 et, d'autre part, des gaz de combustion contactés G3.

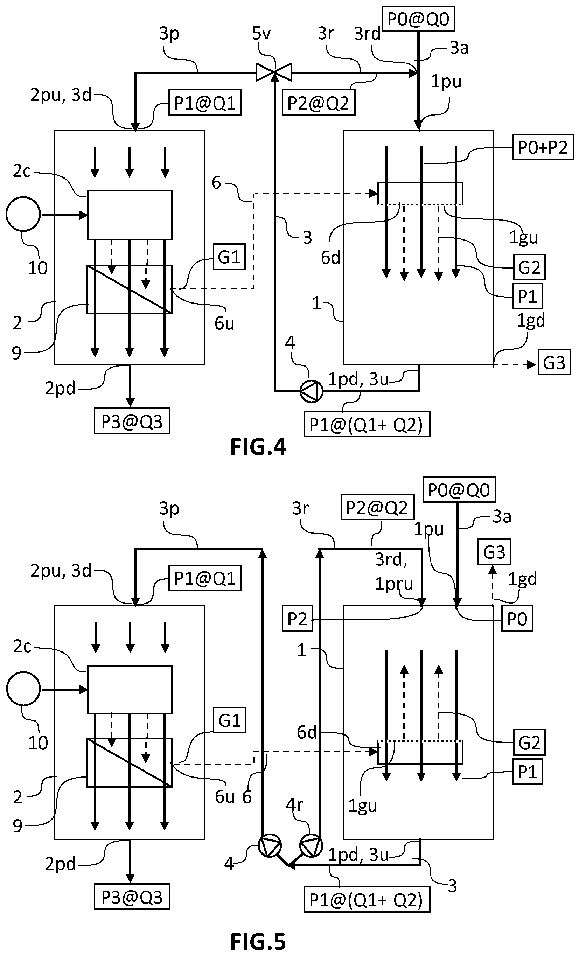

Dans une variante préférée, illustrée dans les Figures 2&4, les flux d'alimentation F0 et de recirculation, F2, sont mélangés avant leur introduction dans le contacteur gaz-acide pour former un flux d'un mélange de la solution d'alimentation d'acide phosphorique, P0, et de la solution d'acide phosphorique enrichi recirculé, P2. Pour cela il suffit d'embrancher un conduit de recirculation (3r) acheminant le flux F2 et un conduit d'alimentation (3a) acheminant le flux F0 en amont d'une entrée (1pu) du contacteur gaz-acide (1). Les pressions dans les conduits de recirculation (3r) et d'alimentation (3a) doivent être contrôlées afin d'éviter un reflux de liquide dans une des deux conduites embranchées. La Figure 2 montre une conduite d'alimentation (3a) embranchée dans la conduite de recirculation (3r), alors que la Figure 4 illustre une conduite de recirculation (3r) embranchée dans une conduite d'alimentation (3a). Dans les deux configurations, les gaz de combustion, G1, sont alors mis en contact avec le mélange de flux de solutions d'acide phosphorique (F0+F2) ainsi formé après l'introduction de ce dernier dans le contacteur gaz-acide (1).

Dans une variante alternative, illustrée aux Figures 3&5, les flux d'alimentation F0 et de recirculation F2 sont contactés après avoir été introduits séparément dans le contacteur gaz-acide pour former un flux d'un mélange de la solution d'alimentation d'acide phosphorique P0 et de la solution d'acide phosphorique enrichi recirculé P2. Les flux d'acide phosphorique F0 et F2 et de gaz de combustion G1 sont ainsi tous mis en contact dans le contacteur gaz-acide. Il suffit de prévoir dans le contacteur gaz-acide une entrée (1pu) de flux d'alimentation F0 séparée d'une entrée (1pru) de flux de recirculation F2.

Le contact entre les flux d'alimentation F0 et de recirculation F2 ou leur mélange (F0+F2) et les gaz de combustion G1 dans le contacteur gaz-acide peut s'effectuer par contact de flux à co-courant ou à contre-courant. Dans une variante préférée, les trois flux s'écoulent à co-courant depuis une partie supérieure vers une partie inférieure du contacteur gaz-acide. Dans le contexte de la présente invention, les termes « supérieur » et « inférieur » se comprennent suivant la direction des forces de la gravité terrestre qui s'étendent en direction du centre de gravité de la terre. Ainsi, en l'absence de gradients de pression, un liquide s'écoule naturellement de la partie supérieure d'un réacteur vers sa partie inférieure qui se trouve en aval de la partie supérieure suivant la direction de la gravité terrestre.

Il est possible de contacter les gaz de combustion G1 avec les flux d'alimentation et de recirculation d'acide phosphorique, F0&F2, ou leur mélange (F0+F2) en guidant les gaz de combustion dans un flux transversal à ceux des acides phosphoriques. La mise en contact selon des flux co-courants est cependant préférée.

Le contact entre les flux d'alimentation F0 et de recirculation F2 ou leur mélange (F0+F2) et les gaz de combustion G1 peut s'effectuer en faisant percoler les flux à travers un matériau de remplissage qui résiste aux conditions opératoires.

La solution d'acide phosphorique enrichi P1 (qui est en phase liquide) et les gaz de combustion contactés G3 formés suite à la mise en contact des flux d'alimentation et de recirculation d'acide phosphorique, F0&F2, avec les gaz de combustion G1 sont alors séparés par des moyens de séparation bien connus de l'homme du métier, tels qu'un séparateur centrifuge ou par gravité, un coalesceur, un dévésiculeur, un matelas, des chicanes, etc. Les gaz de combustion contactés G3 sont alors évacués du contacteur gaz-acide (1) à une température sensiblement inférieure à celle des gaz de combustion G1 introduits dans ledit contacteur gaz-acide pour des traitements ultérieurs. Les gaz de combustion contactés G3 peuvent également subir un lavage après leur sortie du contacteur gaz-acide, avec une solution aqueuse de lavage afin de dissoudre et éliminer les composés fluorés, SO3, etc. avant de relâcher les gaz dans l'atmosphère. D'autres traitements des gaz de combustion contactés G3 sont possibles, incluant par exemple la condensation des gaz dans un condenseur indirect. La solution d'acide phosphorique enrichi P1 est également sortie du contacteur gaz-acide, séparément des gaz de combustion contactés G3.

### Procédé - division des flux F1 et F2

La solution d'acide phosphorique enrichi P1 est divisée en deux flux distincts :
- un flux de recirculation F2 de solution d'acide phosphorique enrichi recirculé P2 pour l'introduire dans le contacteur gaz-acide (1) pour le mettre en contact avec le flux d'alimentation F0 et les gaz de combustion G1 tel que décrit supra, et
- un flux de pulvérisation F1 de la solution d'acide phosphorique enrichi P1 pour l'introduire dans une chambre de combustion (2),

La solution d'acide phosphorique enrichi (P1) et la solution d'acide phosphorique enrichi recirculé (P2) sont identiques en composition (P1 = P2) puisqu'elles n'ont subi aucune altération entre le moment de leur formation dans le contacteur gaz-acide et la division en deux flux distincts de recirculation et de pulvérisation. Les solutions P1 et P2 comprennent de préférence, en régime stationnaire, une concentration en P₂O₅ plus élevée que celle de la solution d'alimentation d'acide phosphorique P0. Ceci s'explique par deux raisons principales.

Premièrement, la mise en contact des flux d'alimentation et de recirculation d'acide phosphorique avec les gaz de combustion G1 qui sont à une température Tg1 plus élevée de l'ordre de 500 à 600°C (cf. Figure 3), entraîne l'évaporation d'une partie de l'eau contenue dans la phase aqueuse des solutions d'acide phosphorique P0 et P2, ce qui augmente de facto la concentration en P₂O₅.

Deuxièmement, comme nous le discuterons plus loin, les gaz de combustion G1 formés lors de la polycondensation du flux de pulvérisation F1 de solution d'acide phosphorique enrichi P1 dans la chambre de combustion comprennent des gouttelettes ou des vapeurs d'acide polyphosphorique. Les gaz de combustion G1 peuvent comprendre entre 0.5 et 40% en poids en P₂O₅, de préférence entre 1 et 30%, de préférence entre 2 et 25%, ou entre 5 et 20% (cf. Figure 3). Lors du contact avec les flux d'alimentation et de recirculation de solutions d'acide phosphorique P0 et d'acide phosphorique enrichi recirculé P2, la majeure partie de ces molécules sont transférées des gaz de combustion vers le mélange de solution d'acides (P0+P2). Après contact, les gaz de combustion contactés G3 contiennent beaucoup moins de molécules de P₂O₅ qu'avant le contact, en général moins de 0.1% en poids (cf. Figure 3). Par ce transfert de molécules de P₂O₅ vers le mélange d'acides, la concentration en P₂O₅ de celui-ci augmente.

La concentration en P₂O₅ de la solution d'acide phosphorique enrichi P1 est de préférence supérieure ou égale à 50%, de préférence supérieure ou égale à 54%, encore de préférence supérieure à 62%, ou même à 65%, de préférence supérieure à 67% ou même à 70%. Dans une variante préférée de l'invention, la concentration de P1 est comprise entre 71 et 80%, de préférence entre 72 et 78%, encore de préférence entre 73 et 77%.

Dans une variante de l'invention, la solution d'acide phosphorique enrichi P1 est divisée en deux flux de pulvérisation F1 et de recirculation F2 à la sortie du contacteur gaz-acide dans une connexion fluidique de pulvérisation (3p) et dans une connexion fluidique de recirculation (3r), respectivement, tel qu'illustré à la Figure 2. Chacune des connexions fluidiques (3p) et (3r) est équipée d'un système de pompage (4, 4r) pour assurer les débits pour entraîner le flux de pulvérisation F1 à un débit de pulvérisation Q1 vers une chambre de combustion (2) et pour entraîner le flux de recirculation F2 à un débit Q2 vers le contacteur gaz-acide formant ainsi une boucle de recirculation.

Dans une variante alternative, la solution d'acide phosphorique enrichi P1 est sortie du contacteur gaz-acide dans une première connexion fluidique (3) qui est commune et se divise en deux en un point d'embranchement (5) en « T » ou en « Y » avec, d'une part, la connexion fluidique de pulvérisation (3p) qui continue entraînant le flux de pulvérisation F1 à un débit Q1, vers une chambre de combustion (2) et, d'autre part une connexion fluidique de recirculation (3r) qui entraîne le flux de recirculation F2 à un débit Q2 vers le contacteur gaz-acide, formant ainsi une boucle de recirculation. Différentes variantes de cette configuration comprenant un point d'embranchement (5) sont illustrées aux Figures 3 à 5. Les débits de pulvérisation Q1 et de recirculation Q2 peuvent être contrôlés par une valve à trois voies (cf. Figure 3 et 4), par des pompes (4, 4r) sur chacune des branches du point d'embranchement (5) (cf. Figure 5) et/ou par des sections de conduits de pulvérisation (3p) et de recirculation (3r) dimensionnées pour obtenir les débits désirés ou d'autres moyens bien connus et utilisés industriellement pour répartir un flux entre 2 alimentations (par exemple, des conduites en T, en Y avec jeux de vannes régulées).

Dans un état stationnaire de production, le rapport, Q1 / (Q1 + Q2), entre le débit massique Q1 du flux de pulvérisation F1 et le débit massique total (Q1 + Q2) de la somme des flux de pulvérisation F1 et de recirculation F2 est de préférence inférieur à 50%, de préférence inférieur à 20% et encore de préférence inférieur à 10%. Dans une variante préférée de l'invention le rapport Q1 / (Q1 + Q2), est inférieur à 5%, de préférence inférieur à 4%, encore de préférence inférieur à 2.5% et même inférieur à 2%. Le rapport Q1 / (Q1 + Q2), est de préférence supérieur à 0.1%, ou encore supérieur à 0.2% et de préférence supérieur à 0.5%.

Le rapport, Q2 / (Q1 + Q2), entre le débit massique Q2 du flux de recirculation F2 et le débit massique total (Q1 + Q2), est bien entendu le complémentaire du rapport Q1 / (Q1 + Q2), dont la somme fait 100%. Le débit de recirculation Q2 est donc de préférence supérieur ou égal au débit de pulvérisation Q1 et, dans certaines variantes préférées, est considérablement supérieur à Q1 avec un rapport de débits, Q1 / Q2, pouvant aller de 0.1 / 99.9 à 49 / 51 (= 0.1 à 96%). De préférence, le rapport de débits Q1 / Q2, est compris entre 1 / 99 et 5 / 95 (= 1 à 5.3%).

### Procédé - Polycondesation

Le flux de pulvérisation F1 est introduit dans une chambre de combustion (2) et est pulvérisé à travers une flamme brûlant dans la partie supérieure de la chambre de combustion (2) pour :
- évaporer de l'eau et ainsi concentrer la solution d'acide phosphorique enrichi P1,
- polymériser de l'acide polyphosphorique P3 et
- former des gaz de combustion G1.

Dans un état stationnaire de production, le rapport, Q1 / Q0, entre le débit Q1 du flux de pulvérisation F1 et le débit Q0 du flux d'alimentation F0 est de préférence compris entre 100 et 250%, de préférence entre 101 et 140%, de préférence entre 110 et 115%.

Il est possible d'introduire une partie du flux F0 de solution d'alimentation P0 directement dans la chambre de combustion. Dans cette variante, une partie du flux d'alimentation P0 peut être injectée dans le contacteur gaz-acide et une autre partie dans la chambre de combustion, soit pulvérisé directement dans la flamme ou pré-mélangé avec le flux de pulvérisation F1 avant d'introduire un mélange des deux flux dans la chambre de combustion. Dans le premier cas, la chambre de combustion comprendrait une entrée séparée pour introduire le flux d'alimentation F0. Dans le second cas, le mélange entre les flux de pulvérisation F1 et d'alimentation F0 se ferait en amont de l'entrée (2pu) d'acide phosphorique enrichi. Le rapport entre le débit de flux d'alimentation F0 introduit dans la chambre de combustion et le débit de flux d'alimentation F0 introduit dans le contacteur peut être compris entre 0 et 95%, de préférence entre 5 et 80%.

La température atteinte par la solution d'acide polyphosphorique P3 est un paramètre important du procédé puisque la concentration en P₂O₅ obtenue dans cette solution en est dépendante comme le montre le graphe de la Figure 1(a). Il est aussi important de maintenir la solution d'acide phosphorique enrichi en contact avec la flamme et les gaz de combustion durant un temps de séjour suffisant à la température de polycondensation requise pour obtenir la concentration en P₂O₅ attendue et assurer la transformation en acide polyphosphorique.

La flamme est alimentée par un combustible et une source d'oxygène, typiquement de l'air. La flamme est de préférence une flamme légèrement oxydante, de préférence entre 1 à 5% en volume d'excès d'air, de préférence entre 2 et 3% en volume. Le combustible est de préférence du gaz naturel, du butane, propane, ou tout autre combustible qu'il soit gazeux ou liquide. Sans la pulvérisation de solution d'acide enrichi, la flamme atteint de préférence une température théorique d'au moins 1000°C, de préférence au moins 1500°C, encore de préférence au moins 1700°C, par exemple 1800°C ± 50°C. Dans le procédé de la présente invention, l'accroissement de température est instantanément limité car, d'une part, la solution d'acide phosphorique enrichi P1 est alimentée à une température T1 inférieure, de l'ordre de 200-300°C et, d'autre part, car la réaction de polycondensation et l'évaporation des molécules d'eau de la solution et formées lors de la polycondensation sont énergivores. Il est préférable que la solution d'acide phosphorique enrichi pulvérisé dans la flamme atteigne une température de polycondensation, Tpc, d'au moins 400°C, de préférence au moins 500°C et même supérieure à 550°C, voire de l'ordre de 650°C, pendant un temps de polycondensation prédéfini. Une température de polycondensation Tpc élevée permet d'obtenir des solutions d'acide polyphosphorique à haute concentration en P₂O₅, de l'ordre de 86% P₂O₅ avec des longueurs de chaînes n plus longues (e.g., n ≥ 5 à 12) (cf. Figure 1(c)). Les températures nécessaires à la polycondenstion de l'acide phosphorique exigent des matériaux thermorésistants pour les différents éléments du dispositif de réaction. La solution d'acide phosphorique enrichi P1, qui comprend des molécules d'acide orthophosphorique et des oligomères d'acide polyphosphorique (de m unités) subit une réaction de polycondensation sous l'action de la température pour former une solution d'acide polyphosphorique et de l'eau, selon la réaction (1) décrite supra et selon l'équation chimique (2) (avec m ≥ 1 et r ≥ 1) :

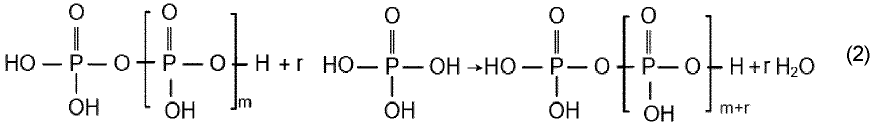

La solution d'acide polyphosphorique P3 ainsi formée est alors séparée des gaz de combustion G1 formés lors de la polycondensation de l'acide polyphosphorique P3 dans un séparateur gaz-liquide (9). La solution d'acide polyphosphorique P3 est récupérée alors que les gaz de combustion G1 sont transférés dans le contacteur gaz-acide (1) pour être mis en contact avec les flux d'alimentation F0 et de recirculation F2, tel que décrit plus haut.

Le flux F3 de la solution d'acide polyphosphorique P3 ainsi récupérée peut avoir une température élevée de l'ordre de 350 à 700°C, de préférence 400 à 650°C, selon la température de polycondensation Tpc utilisée. Il est préférable de refroidir la solution P3 dans un échangeur de chaleur (11) (cf. Figure 2) à une température de l'ordre de 100 à 200°C, par exemple entre 110 et 150°C, de préférence entre 120 et 130°C ce qui permet un plus grand choix de matériaux pour la cuve de stockage de l'acide polyphosphorique ainsi formé et refroidi, tout en maintenant la solution à l'état liquide.

La solution d'acide polyphosphorique P3 ainsi formée et récupérée comprend une concentration en P₂O₅ plus élevée que celle de la solution d'acide phosphorique enrichi P1. Ceci s'explique par l'évaporation d'une grande partie de l'eau de la solution lors du passage de celle-ci dans la flamme. La concentration de la solution d'acide polyphosphorique P3 est généralement supérieure à 76%, de préférence supérieure à 80%, particulièrement de préférence supérieur à 86%, ou au moins 87% et même au moins 88% en P₂O₅. Elle peut par exemple être comprise entre 76 et 90%, de préférence entre 86 et 89%. Des teneurs en P₂O₅ supérieures à 86% par voie humide sont rendues possibles grâce au procédé de la présente invention.

Les gaz de combustion G1 sont notamment constitués de CO₂, N₂, O₂, H₂O, SO₃, F, et de gouttelettes et vapeurs de P₂O₅, ces dernières pouvant être présentes en des quantités pouvant varier entre 0.5 et 40% en poids de P₂O₅, en général entre 0.5 et 35% en poids en P₂O₅, de préférence entre 1 et 30%, de préférence entre 2 et 25%, ou entre 5 et 20% en poids de P₂O₅. La température Tg1 des gaz de combustion G1 transférés est sensiblement inférieure à la température que peut atteindre la flamme car, comme discuté plus haut, la température dans l'unité de combustion chute lors de la réaction de polycondensation qui requiert beaucoup d'énergie, principalement pour évaporer l'eau de la réaction de polycondensation. Les gaz de combustion entrent dans le contacteur à une température Tg1 qui est de l'ordre de la température de polycondensation Tpc, et est généralement comprise entre 400 et 700°C, de préférence entre 500 et 600°C.

### Procédé - Boucle de recirculation et gaz de combustion

Comme discuté ci-dessus, une fraction de recirculation de la solution d'acide phosphorique enrichi P1 sortant du contacteur gaz-acide (1) est réintroduite dans le contacteur gaz-acide formant ainsi une boucle de recirculation alors qu'une fraction de pulvérisation est acheminée vers la chambre de combustion (2). La fraction de recirculation est de préférence supérieure ou égale à la fraction de pulvérisation et est idéalement considérablement supérieure à la fraction de pulvérisation, avec des rapports Q1 / Q2 du débit de pulvérisation Q1 sur le débit de recirculation Q2 pouvant aller de 0.1 / 99.9 à 5 / 95 (= 0.1 à 5.3%). De préférence, le rapport de débits Q1 / Q2, est compris entre 1 / 99 et 4 / 96 (= 1 à 4.2%).

La boucle de recirculation est l'élément distinctif majeur entre la présente invention et le procédé décrit dans EP2411325 B1. La conséquence principale de l'introduction d'une telle boucle de recirculation est que le rapport (Qg1 / (Q0+Q2)) entre le débit massique Qg1 du gaz de combustion G1 introduit dans le contacteur gaz-acide (1) et le débit massique total (Q0 + Q2) des flux d'alimentation F0 et de recirculation F2 introduits dans le contacteur gaz-acide (1), est beaucoup plus bas qu'en l'absence d'une telle boucle de recirculation. Le rapport (Qg1 / (Q0+Q2)) selon la présente invention est de préférence compris entre 0.1 et 50%, encore de préférence entre 0.5 et 20 ou 10%, et est idéalement compris entre 1 et 7%. Dans un procédé selon EP2411325 B1 comprenant une mise en contact des gaz de combustion avec le flux d'alimentation F0 (i.e., Qg1 > 0, Q0 > 0) mais pas de flux de recirculation F2 (i.e., Q2 = 0), le rapport (Qg1 / Q0) est considérablement plus grand, avec des valeurs supérieures à 45%, en général supérieures à 100%, indicatif d'un débit de gaz de combustion Qg1 plus important que le débit d'alimentation Q0 de solution d'alimentation d'acide phosphorique P0.

La boucle de recirculation permet donc de contrôler le rapport entre le débit de gaz de combustion G1 et le débit total (Q0+Q2) de solutions d'alimentation d'acide phosphorique P0 et de solution d'acide phosphorique enrichi recirculé P2. En particulier il permet d'augmenter considérablement la masse de solution d'acide phosphorique contactée avec le gaz de combustion. Ceci a plusieurs avantages.

D'une part, le transfert des gouttelettes et vapeurs de P₂O₅ contenues dans les gaz de combustion G1 vers le flux du mélange des solutions d'acide phosphorique P0 et P2 est beaucoup plus complet. La concentration en P₂O₅ de la solution d'acide phosphorique enrichi P1 formée lors du contact avec les gaz de combustion est ainsi plus élevée que si le rapport de débits Qg1 / (Q0+Q2) avait été plus élevé, comme dans EP2411325 B1. Le meilleur contact gaz / liquide ainsi obtenu permet une meilleure récupération par la solution d'acide phosphorique enrichi P1 du P₂O₅ contenu dans les gaz de combustion G1. De plus, les gaz de combustion G3 après le contact avec les flux F0 et F2 sont ainsi nettoyés de leur contenu en P₂O₅, allégeant leur traitement avant de les relâcher dans l'atmosphère.

D'autre part, avec de tels rapports de débits, la température Tg3 des gaz de combustion après leur contact avec les flux F0 et F2 de solutions d'acide phosphorique est réduite beaucoup plus efficacement que dans le procédé décrit dans EP2411325 B1, ne nécessitant ainsi aucun autre échangeur de chaleur (ou du moins de moindre capacité), essentiel dans le procédé de EP2411325 B1 pour descendre la température des gaz de combustion à une valeur acceptable pour leur évacuation dans l'atmosphère.

### Dispositif

Le procédé de la présente invention peut être implémenté dans un dispositif comprenant une chambre de combustion (2), un contacteur gaz-acide (1) et diverses connexions fluidiques entre la chambre de combustion et le contacteur gaz-acide. Il est clair que le dispositif peut comprendre plusieurs chambres de combustion et/ou plusieurs contacteurs gaz-acide positionnés en parallèle ou en série.

### Dispositif - chambre de combustion (2)

La chambre de combustion (2) permet d'effectuer la polycondensation de la solution d'acide phosphorique enrichi P1 en une solution d'acide polyphosphorique P3. Les parois de la chambre de combustion doivent résister au caractère corrosif des solutions d'acide phosphorique enrichi P1 et aux hautes températures régnant à l'intérieur de celle-ci, Il est préférable que les parois soient faites en carbure de silicium ou en carbone amorphe. Il est possible d'utiliser des doubles parois avec un gaz neutre ou les gaz de combustion circulant entre les deux parois, ce qui peut avoir des avantages en termes de température des parois, et imperméabilité de celles-ci aux solutions d'acide (poly)phosphorique.

La chambre de combustion (2) présente une ou plusieurs entrée(s) d'acide phosphorique enrichi (2pu) dans la chambre de combustion permettant l'introduction d'une solution d'acide phosphorique enrichi P1 sous forme pulvérisée dans une unité de combustion située dans une partie supérieure de la chambre de combustion. Une alimentation en un gaz inerte, tel que de l'azote, peut être prévue pour optimiser la pulvérisation de la solution d'acide phosphorique enrichi P1 qui peut avoir une viscosité importante à l'entrée de la chambre de combustion.

La chambre de combustion (2) comprend une unité de combustion (2c) agencée dans la partie supérieure de la chambre de combustion, et capable de former une flamme ayant une température d'au moins 1000°C, de préférence au moins 1500°C, et même au moins 1700°C, de préférence 1800°C ± 50°C, par combustion d'un combustible en présence d'oxygène. L'unité de combustion comprend :
- un brûleur,
- des connexions fluidiques entre le brûleur et, d'une part, une source d'oxygène et, d'autre part, une source de combustible (10) permettant d'alimenter la flamme, le contrôle du rapport entre les apports en combustible et en oxygène vers le brûleur permettent de contrôler la température de la flamme. De préférence, le combustible utilisé est choisi parmi le gaz naturel, le butane, le propane. La source d'oxygène est généralement de l'air ou de l'oxygène.

La chambre de combustion (2) est équipée d'un séparateur gaz-liquide (9) pour séparer la solution d'acide polyphosphorique P3 ainsi formée des gaz de combustion G1. Par exemple, les gaz de combustion peuvent être séparés de la solution d'acide polyphosphorique par un agrandissement de la surface transversale de débit, ce qui a pour conséquence de diminuer la vitesse d'écoulement et donc l'énergie cinétique des flux de gaz et d'acide polyphosphorique. Comme les flux s'écoulent du haut vers le bas, par la baisse de leur énergie cinétique, les gaz vont ralentir et peuvent être déviés vers un déflecteur qui les guide vers la sortie des gaz de combustion. Grâce à leur densité plus élevée, les gouttelettes d'acide polyphosphorique P3 continuent leur écoulement vers le bas par la gravité.

La chambre de combustion (2) présente une sortie d'acide polyphosphorique (2pd) de la chambre de combustion pour récupérer une phase liquide, et agencée en aval de l'unité de combustion qui est elle-même agencée en aval de l'entrée d'acide phosphorique enrichi (2pu), Le terme « aval » est exprimé par rapport au sens d'écoulement des solutions d'acide phosphorique enrichi P1 et d'acide polyphosphorique P3 dans la chambre de combustion. Comme expliqué plus haut, le sens d'écoulement est de préférence du haut vers le bas suivant la direction de la gravité. Le dispositif peut ainsi être équipé d'une cuve de stockage de l'acide polyphosphorique ainsi produit (non illustrée). De préférence, le dispositif comprend un échangeur de chaleur (11) agencé entre la sortie d'acide polyphosphorique (2pd) et la cuve de stockage, afin de refroidir la solution d'acide polyphosphorique d'une température comprise entre environ 400 et 650°C à une température de l'ordre de 100 à 150°C lorsqu'elle atteint la cuve de stockage.

Enfin, la chambre de combustion (2) est munie d'une sortie d'évacuation de gaz de combustion G1 issus de la flamme. Ces gaz de combustion ont une température Tg1 de l'ordre de la température de polycondensation Tpc et ne nécessitent pas d'être refroidis avant d'être introduits dans le contacteur gaz-acide.

### Dispositif - contacteur gaz-acide (2)

Le contacteur gaz-acide (1) permet de réchauffer et d'augmenter la concentration équivalente en unités P₂O₅ de la solution d'alimentation d'acide phosphorique P0 introduite dans le contacteur, avant son entrée dans la chambre de combustion (2) afin d'optimiser le rendement et la consommation énergétique de la réaction de polycondensation.

Le contacteur gaz-acide (1) présente une entrée d'alimentation (1pu) reliée à une source d'une solution d'alimentation d'acide phosphorique P0 ou d'un mélange de solution d'alimentation d'acide phosphorique P0 et de solution d'acide phosphorique enrichi P2. Comme discuté plus haut, la solution d'alimentation d'acide phosphorique P0 comprend au moins 40%, de préférence au moins 50%, de préférence au moins 54%, encore de préférence au moins 58% ou même au moins 60% équivalent en unités de P₂O₅. Il s'agit de la matière première pour la production d'acide polyphosphorique P3. L'entrée d'alimentation (1pu) doit être dimensionnée pour permettre l'introduction de la solution d'alimentation d'acide phosphorique P0 à un débit d'alimentation Q0 ou l'introduction du mélange de solution d'alimentation d'acide phosphorique P0 et de solution d'acide phosphorique enrichi P2 à un débit (Q0 + Q2).

Le contacteur gaz-acide (1) est de préférence un contacteur direct. Il comprend une entrée de gaz de combustion (1gu) permettant l'introduction dans le contacteur gaz-acide des gaz de combustion G1 provenant de la sortie d'évacuation de gaz de combustion G1. L'entrée d'alimentation (1gu) doit être dimensionnée pour permettre l'introduction des gaz de combustion G1 à un débit Qg1. Comme discuté plus haut, les gaz de combustion G1 mis en contact avec la solution d'alimentation d'acide phosphorique P0 permet (a) d'augmenter la température de solution d'alimentation d'acide phosphorique P0, (b) évaporer une partie de l'eau de la solution d'alimentation d'acide phosphorique P0 et (c) échanger avec la solution P0 les gouttelettes et vapeurs de P₂O₅ contenues dans le gaz de combustion G1.

Le contacteur gaz-acide (1) est muni d'une entrée de recirculation (1pru), permettant l'introduction d'une solution d'acide phosphorique enrichi recirculé (P2). Dans une variante de l'invention, les flux F0 et F2 sont mélangés avant d'être introduits dans le contacteur gaz-acide et l'entrée de recirculation est alors la même que l'entrée d'alimentation (1pu). Dans une variante alternative, les entrées d'alimentation (1pu) et de recirculation (1pru) sont séparées. L'entrée de recirculation doit être dimensionnée pour permettre l'introduction de la solution d'acide phosphorique enrichi recirculé P2 à un débit d'alimentation Q2.

L'entrée de gaz (1gu), l'entrée d'alimentation (1pu) et, si elle est séparée de celle-ci, l'entrée de recirculation (1pru) sont agencées pour permettre, d'une part,
- un contact entre les flux d'alimentation F0 et flux de recirculation F2 pour former un flux (F0 + F2) d'un mélange (P0+P2) de la solution d'alimentation d'acide phosphorique P0 et de la solution d'acide phosphorique enrichi recirculé P2 et, d'autre part,
- un contact du flux du mélange ainsi formé avec le flux des gaz de combustion G1.

L'entrée de gaz (1gu) est de préférence agencée de sorte que les gaz de combustion G1 (et dénommés G2 lors du contact) s'écoulent à co-courant avec les flux d'alimentation F0 et de recirculation F2 d'acides phosphorique. Mais il est possible d'arranger l'entrée de gaz de sorte que les gaz de combustion s'écoulent à contre-courant des flux F0 et F2.

Le contacteur gaz-acide comprend de préférence un matériau de remplissage, au travers duquel percolent les flux d'alimentation F0 et de recirculation F2 de solutions d'acide phosphorique. Le matériau de remplissage est de préférence disposé sur un support perforé, par exemple une grille de support.

Le contacteur gaz-acide (1) comprend une ou plusieurs sorties d'acide phosphorique enrichi (1pd, 1prd), La ou les sorties d'acide phosphorique enrichi (1pd, 1prd) sont positionnées en aval de l'entrée de gaz (1gu), qui est elle-même positionnée en aval de l'entrée d'alimentation (1pu) et, si elle est séparée de celle-ci, l'entrée de recirculation (1pru). Le terme « aval » est exprimé par rapport au sens d'écoulement des flux d'alimentation et de recirculation des solutions d'alimentation d'acide phosphorique et d'acide phosphorique enrichi recirculé P2 dans le contacteur gaz-acide. La ou les sorties d'acide phosphorique enrichi (1pd, 1prd) permettent de sortir la solution d'acide phosphorique enrichi P1 formée dans le contacteur gaz-acide formée par le contact entre les flux F0 et F2 et les gaz de combustion G1.

Le contacteur gaz-acide (1) comprend un séparateur gaz-liquide permettant de séparer les liquides des gaz après le contact entre les gaz de combustion G1 et les solutions d'acide phosphoriques P0 et P1. Par exemple le contacteur gaz-acide peut comprendre un débrumiseur qui permet de récupérer d'éventuelles gouttelettes de liquide présentes dans le gaz de combustion contacté G3 avant sa sortie via la sortie de gaz (1gd).

Le contacteur gaz-acide (1) comprend également une sortie (1gd) de gaz de combustion, permettant d'évacuer du contacteur gaz-acide les gaz de combustion contactés G3 après leur contact avec le mélange des solutions d'acide phosphorique P0 et P2, le dispositif peut être suivi d'une tour de lavage des gaz de combustion contactés G3 situés en aval de la sortie (1gd) de gaz de combustion du contacteur gaz-acide, permettant d'éliminer les composés fluorés et soufrés que les gaz contiennent avant de les relâcher dans l'atmosphère.

Le dispositif est équipé d'une connexion fluidique (6) de gaz de combustion reliant une extrémité (6u) couplée à la sortie d'évacuation des gaz de combustion de la chambre de combustion (2), à une extrémité (6d) couplée à l'entrée de gaz de combustion (1gu) dans le contacteur gaz-acide (1). La température dans cette connexion fluidique (6) doit de préférence être maintenue la plus élevée possible afin qu'au niveau de l'entrée (1gu) dans le contacteur gaz-acide, les gaz de combustion G1 aient une température aussi proche que possible de la température Tg1 qu'ils ont à la sortie de la chambre de combustion, soit d'environ 500 à 600°C.

Le dispositif est équipé d'une connexion fluidique de pulvérisation (3p) reliant une extrémité amont (3u) couplée à la sortie d'acide phosphorique enrichi (1pd) du contacteur gaz acide (1), à une extrémité avale (3d) couplée à l'entrée d'acide phosphorique enrichi (2pu) de la chambre de combustion (2). Comme la solution d'acide phosphorique enrichi P1 a une température et une concentration en P₂O₅ supérieures à celles de la solution d'alimentation d'acide phosphorique P0, le rendement de la polycondensation dans la chambre de combustion est amélioré. Comme le transfert de molécules contenant du phosphore au départ des gaz de combustion G1 vers le mélange de solutions d'alimentation et de recirculation d'acide phosphorique P0 et P2 est meilleur que le transfert entre les gaz de combustion G1 et la solution d'alimentation d'acide phosphorique décrit dans le dispositif de EP2411325 B1, le rendement obtenu avec le dispositif et le procédé de la présente invention est supérieur à celui obtenu dans EP2411325 B1.

Cette amélioration de transfert de molécules d'acide phosphorique et de rendement de la réaction de polycondensation est rendue possible grâce à la boucle de recirculation permettant de réintroduire dans le contacteur gaz-acide une partie du flux d'acide phosphorique P1 sorti du même contacteur gaz-acide. Ainsi le dispositif comprend en outre une connexion fluidique de recirculation (3r) reliant une extrémité amont couplée soit
- à une sortie d'acide phosphorique enrichi recirculé (1prd) du contacteur gaz-acide (1), soit
- à un point d'embranchement (5) avec la première connexion fluidique (3), soit
- à un point d'embranchement (4r) avec la première connexion fluidique (3u),
à une extrémité avale (3r) couplée à l'entrée de recirculation (1pru) du contacteur gaz-acide.

Le dispositif est pourvu de moyens pour contrôler et maintenir un rapport, Q1 / (Q1 + Q2), entre un débit massique de pulvérisation Q1 s'écoulant dans la première connexion fluidique (3) et un débit massique total (Q1 + Q2) défini comme la somme du débit massique de pulvérisation Q1 et d'un débit massique de recirculation Q2 s'écoulant dans la connexion fluidique de recirculation (3r) à une valeur inférieure à 50%, de préférence inférieure à 10%, de préférence inférieure à 5%, encore de préférence inférieure à 2.5% et dans lequel le rapport Q1 / (Q1 + Q2) a une valeur supérieure à 0.1%, de préférence supérieure à 0.5%.

Comme illustré à la Figure 2, les connexions fluidiques (3p) et (3r) peuvent être désolidarisées sur toute leur longueur entre le contacteur gaz-acide et la chambre de combustion avec, d'une part, la connexion fluidique de pulvérisation (3p) reliant une première sortie d'acide phosphorique enrichi (1pd) à l'entrée d'acide phosphorique enrichi (2pu) dans la chambre de combustion et, d'autre part, la connexion fluidique de recirculation (3r) reliant une seconde sortie d'acide phosphorique enrichi (1prd) à l'entrée d'acide phosphorique enrichi recirculé (1pu) du contacteur gaz-acide ou à la connexion d'alimentation (3a) alimentant le contacteur gaz-acide en solution d'alimentation d'acide phosphorique P0. Chacune des connexions fluidiques de pulvérisation (3p) et de recirculation (3r) étant munie d'une pompe (4, 4r) dimensionnées pour maintenir à une valeur désirée le rapport, Q1 / (Q1 + Q2),

Dans une variante alternative illustrée aux Figures 3 à 5 le contacteur gaz-acide est muni d'une sortie (1pd) unique d'acide phosphorique enrichi P1 du contacteur gaz-acide qui est couplée à une première connexion fluidique (3). Les parties amonts des connexions fluidiques de pulvérisation (3p) et de recirculation (3r) sont couplées à un point d'embranchement (5), formant ainsi avec la première connexion fluidique (3) un embranchement en T ou Y. Dans cette variante, on peut utiliser différents moyens pour contrôler et maintenir le rapport, Q1 / (Q1 + Q2) à la valeur désirée.

Dans une première variante illustrée à la Figure 5, les moyens pour contrôler et maintenir le rapport, Q1 / (Q1 + Q2) à la valeur désirée comprennent une pompe (4) agencée sur la connexion fluidique de pulvérisation (3p) et ayant une capacité de pompage d'un liquide à un débit de pulvérisation (Q1) et une pompe de recirculation (4r) agencée sur la connexion fluidique de recirculation (3r) et ayant une capacité de pompage d'un liquide à un débit de recirculation (Q2),

Dans une seconde variante illustrée aux Figures 3 et 4, les moyens pour contrôler le rapport, Q1 / (Q1 + Q2) comprennent une pompe (4) agencée sur la première connexion fluidique (3) en amont du point d'embranchement (5) et ayant une capacité de pompage d'un liquide à un débit principal (Q1+ Q2) et une ou plusieurs vannes (5v) (p.ex., une vanne à trois voies) agencées au point d'embranchement (5) et permettant de diviser le débit principal en un débit de pulvérisation Q1 vers la connexion fluidique de pulvérisation (3p) et en un débit de recirculation Q2 vers la connexion fluidique de recirculation (3r),

Dans une troisième variante (non illustrée), les moyens pour contrôler le rapport, Q1 / (Q1 + Q2) comprennent une pompe (4) agencée sur la première connexion fluidique (3) en amont du point d'embranchement (5) et ayant une capacité de pompage d'un liquide à un débit principal (Q1+ Q2) et des tuyauteries formant les connexions fluidiques de pulvérisation (3p) et de recirculation (3r) dimensionnées de sorte à obtenir le rapport Q1 / (Q1 + Q2) désiré. Cette solution est moins flexible que les deux premières en ce qu'une fois les tuyauteries dimensionnées, le rapport Q1 / (Q1 + Q2) ne peut être varié facilement, ce qui n'est pas nécessairement un problème si le rapport ne doit pas varier pendant la durée de vie du dispositif.

### Solution d'acide polyphosphorique P3

La pulvérisation d'une solution d'acide phosphorique enrichi P1 obtenu par le procédé de la présente invention dans une flamme permet de produire des solutions d'acide polyphosphorique P3 de caractéristiques inégalées à ce jour. Grâce à la haute teneur en P₂O₅ de la solution d'acide phosphorique enrichi P1 propre au procédé de la présente invention et à sa température élevée au moment d'entrer dans la chambre de combustion, des solutions d'acide polyphosphorique de très hautes concentrations en P₂O₅ peuvent être produites dont la valeur dépend *inter alia* de la température de polycondensation.

Dans le cas où la température de polycondensation, Tpc, de la solution d'acide phosphorique enrichi P1 lors de la réaction de polycondensation atteint au moins 500°C, de préférence au moins 600°C ou au moins 650°C, une solution d'acide polyphosphorique P3 jamais produite à ce jour est obtenue, sous forme d'un liquide visqueux, comprenant,
- une teneur en P₂O₅ d'au moins 86%, de préférence au moins 87%, encore de préférence au moins 88% équivalent en unités de P₂O₅,
- une teneur en composés carbonés organiques exprimés sous forme de Carbone Organique Total (= TOC) très basse, inférieure ou égale à 100 ppm, de préférence inférieure ou égale à 80 ppm, et
- une teneur en SO₂ également très basse, inférieure ou égale à 100 ppm, de préférence inférieure ou égale à 80 ppm.

De préférence, la solution d'acide polyphosphorique P3 de la présente invention a une teneur en Fe inférieure ou égale à 10 ppm, une teneur en Sb inférieure ou égale à 10 ppm, et une teneur en SO₄ inférieure ou égale à 11 ppm. Les teneurs des différents composés ci-dessus sont exprimées par rapport à la solution d'acide polyphosphorique.

### Exemple de réalisation

Un dispositif pilote selon la présente invention a été construit et testé. Il comprend un contacteur gaz-acide (1) et une chambre de combustion (2). Les connexions fluidiques comprennent une connexion fluidique de pulvérisation (3p) totalement séparée et indépendante de la connexion de recirculation (3r) comme illustré à la Figure 2. Chacune des connexions fluidiques de pulvérisation (3p) et de recirculation (3r) sont munies d'une pompe (4, 4r) permettant de contrôler et maintenir constant le rapport de débits Q1 / (Q1+Q2) à différentes valeurs comprises entre 0.75 et 6.7%. L'unité de combustion est connectée à une source de gaz naturel et à une alimentation en air dont les débits peuvent être contrôlés afin de contrôler la température de la flamme.

Le Tableau 1 indique les fourchettes de concentrations en P₂O₅, débits, et températures des différents flux d'acide (poly)phosphorique, P0-P3, et de gaz de combustion, G1, G3, testés avec le dispositif pilote. Les positions desdits flux dans un dispositif selon la présente invention sont indiquées à la Figure 3. La température de polycondensation, Tpc, était compris entre 400 and 650°C.

**Tableau 1 : fourchettes de compositions, débits, et températures des différents flux**

| **Flux** | **Fluide** | **Concentration (% eq. P₂O₅)** | **Q (kg / h)** | **T (°C)** |
|---|---|---|---|---|
| F0 | P0 (liq) | > 40% P₂O₅ | O0 = 105-445 | T0 = 20 - 100 |
| F1 | P1 (liq) | > 62% (> 70%) P₂O₅ | Q1 = 150-400 | T1 = 200 - 300 |
| F2 | P2 (liq) | > 62% (> 70%) P₂O₅ | Q2 = 1,000-20,000 | T2 = 200 - 300 |
| qaz | G1 (gaz) | 0.5-10% P₂O₅ | Qg1 = 200-400 | Tg1 = 500-600 |
| F3 | P3 (liq) | > 76% (> 86%) P₂O₅ | Q3 = 150- 250 | T3 = 400 - 650 |
| gaz | G3 (gaz) | < 1% P₂O₅ | Qg3 = 200-400 | Tg3 = 50 - 100 |

Avec une solution d'alimentation P0 comprenant 62% équivalent en P₂O₅, et une température de polycondensation Tpc = 630°C, une solution d'acide polyphosphorique P3 comprenant 88% équivalent en P₂O₅ a été produite avec le dispositif pilote en appliquant un rapport de débits, Q1 / (Q1 + Q2) = 1%.

| **#** | **Caractéristique** |
|---|---|
| 1 | Contacteur gaz-acide |
| 1gd | Sortie de gaz de combustion du contacteur gaz-acide |
| 1gu | Entrée de gaz de combustion dans le contacteur gaz-acide |
| 1pd | Sortie de solution d'acide phosphorique enrichi, P1, du contacteur gaz-acide |
| 1pu | Entrée de solution d'acide phosphorique, P0, ou de mélange (P0+P2) dans le contacteur gaz-acide |
| 1pru | Entrée d'acide phosphorique enrichi, P2, dans le contacteur gaz-acide |
| 2 | Chambre de combustion |
| 2c | Unite de combustion |
| 2pd | Sortie d'acide polyphosphorique, P3, de la chambre de combustion |
| 2pu | Entrée d'acide phosphorique enrichi, P1, dans la chambre de combustion |
| 3 | Première connexion fluidique |
| 3a | Connexion fluidique d'alimentation |
| 3d | Extrémité avale de la première connexion fluidique (3) ou de la connexion fluidique de pulvérisation (3p) |
| 3p | Connexion fluidique de pulvérisation |
| 3r | Connexion fluidique de recirculation vers le contacteur gaz-acide (1) |
| 3rd | Extrémité avale de la connexion fluidique de recirculation (3r) |
| 3u | Extrémité amont de la connexion fluidique de pulvérisation (3p) ou de la première connexion fluidique (3) |
| 4 | Pompe |
| 4r | Pompe de recirculation |
| 5 | Connexion à trois voies |
| 5v | Vanne ou jeu de vannes (ex., vanne à trois voies) |
| 6 | Connexion fluidique de gaz de combustion |
| 6d | Sortie de la connexion de gaz de combustion |
| 6u | Entrée de la connexion de gaz de combustion |
| 10 | Source de combustible pour l'unité de combustion (10) |
| 11 | Echangeur de chaleur |
| F0 | Flux d'alimentation de solution d'alimentation d'acide phosphorique |
| F1 | Flux de pulvérisation de solution d'acide phosphorique enrichi |
| F2 | Flux de recirculation de solution d'acide phosphorique enrichi recirculé |
| F3 | Flux de de solution d'acide polyphosphorique |
| G1 | Gaz de combustion |
| G2 | Gaz de combustion en contact avec mélange (P0+P2) |
| G3 | Gaz de combustion contactés |
| P0 | Solution d'alimentation d'acide phosphorique |
| P0+P2 | Mélange de la solution d'alimentation d'acide phosphorique (P0) et de la solution d'acide phosphorique enrichi recirculé (P2) |
| P1 | Solution d'acide phosphorique enrichi |
| P2 | Solution d'acide phosphorique enrichi recirculé |
| P3 | Acide polyphosphorique |
| Q0 | Débit d'alimentation de la solution d'alimentation d'acide phosphorique |
| Q2+Q1 | Débit principal de la solution d'acide phosphorique enrichi |
| Q1 | Débit de pulvérisation de la solution d'acide phosphorique enrichi |
| Q2 | Débit de recirculation de la solution d'acide phosphorique enrichi recirculé |
| Q3 | Débit de l'acide polyphosphorique |
| Qg1 | Débit des gaz de combustion vers le contacteur gaz-acide (1) |
| Qg2 | Débit des gaz de combustion dans le contacteur gaz-acide (1) |
| Gg3 | Débit des gaz de combustion contactés hors du contacteur gaz-acide (1) |
| T0 | Température de la solution d'alimentation d'acide phosphorique (P0) |
| T1 | Température de la solution d'acide phosphorique enrichi (P1) |
| T2 | Température de la solution d'acide phosphorique enrichi recirculé (P2) |
| T3 | Température de la solution d'acide polyphosphorique (P3) |
| Tg1 | Température des gaz de combustion (G1) |
| Tg2 | Température des gaz de combustion en contact (G2) |
| Tg3 | Température des gaz de combustion contactés (G3) |

## Revendications

1. Procédé de production d'acide polyphosphorique P3 comprenant les étapes suivantes :
(a) introduire dans un contacteur gaz-acide (1), un flux d'alimentation F0 de solution d'alimentation d'acide phosphorique P0 et comprenant au moins 40% équivalent en unités de P₂O₅,
(b) introduire dans le contacteur gaz-acide (1), un flux de recirculation F2 de solution d'acide phosphorique enrichi recirculé P2 ,
(c) introduire dans le contacteur gaz-acide (1) des gaz de combustion G1 ;
(d) contacter les flux d'alimentation F0 et de recirculation F2 et les gaz de combustion G1 pour former, d'une part, une solution d'acide phosphorique enrichi P1 et, d'autre part, des gaz de combustion contactés G3,
• séparer les gaz de combustion contactés G3 de la solution d'acide phosphorique enrichi P1,
• évacuer les gaz de combustion contactés G3 du contacteur gaz-acide (1), et
• sortir la solution d'acide phosphorique enrichi P1 du contacteur gaz-acide (1),
(e) former à partir de ladite solution d'acide phosphorique enrichi P1, d'une part,
• un flux de recirculation F2 de solution d'acide phosphorique enrichi recirculé P2 pour l'introduire dans le contacteur gaz-acide (1) tel que défini à l'étape (b) et, d'autre part,
• un flux de pulvérisation F1 de la solution d'acide phosphorique enrichi P1 pour l'introduire dans une chambre de combustion (2),
(f) pulvériser la solution d'acide phosphorique enrichi P1 à travers une flamme brûlant dans la partie supérieure de la chambre de combustion (2) pour :
• évaporer de l'eau et ainsi concentrer la solution d'acide phosphorique enrichi P1,
• polymériser la solution d'acide phosphorique enrichi pour former de l'acide polyphosphorique P3 et
• former des gaz de combustion G1,
(g) séparer la solution d'acide polyphosphorique P3 des gaz de combustion G1 et
• récupérer la solution d'acide polyphosphorique P3, et
• transférer les gaz de combustion G1 dans le contacteur gaz-acide (1) tel que défini à l'étape (c),

2. Procédé selon la revendication 1, dans lequel la solution d'alimentation d'acide phosphorique P0 comprend au moins 50%, de préférence au moins 54%, encore de préférence au moins 58% ou même au moins 60% P₂O₅.

3. Procédé selon la revendication 1 ou 2 dans lequel les flux d'alimentation F0 et de recirculation F2 sont mélangés avant leur introduction dans le contacteur gaz-acide pour former un flux d'un mélange de la solution d'alimentation d'acide phosphorique P0 et de la solution d'acide phosphorique enrichi recirculé P2.

4. Procédé selon la revendication 1 ou 2, dans lequel les flux d'alimentation F0 et de recirculation F2 sont contactés après avoir été introduits séparément dans le contacteur gaz-acide pour former un flux d'un mélange de la solution d'alimentation d'acide phosphorique P0 et de la solution d'acide phosphorique enrichi recirculé P2.

5. Procédé selon l'une quelconque des revendications précédentes, dans lequel la solution d'acide phosphorique enrichi P1 et la solution d'acide phosphorique enrichi recirculé P2 sont identiques et comprennent une valeur d'équivalents en unité de P₂O₅ plus élevée que celle de la solution d'alimentation d'acide phosphorique P0, et est supérieure ou égale à 50%, de préférence supérieure ou égale à 54%, encore de préférence supérieure à 62%, de préférence supérieure à 70%, et encore de préférence comprise entre 71 et 80%, et de préférence entre 72 et 76%.

6. Procédé selon l'une quelconque des revendications précédentes, dans lequel, dans un état stationnaire de production, un rapport, Q1 / (Q1 + Q2), entre un débit massique Q1 du flux de pulvérisation F1 et un débit massique total (Q1 + Q2) de la somme des flux de pulvérisation F1 et de recirculation F2 est inférieur à 50%, de préférence inférieur à 10%, de préférence inférieur à 5%, encore de préférence inférieur à 2.5% et dans lequel le rapport Q1 / (Q1 + Q2) est supérieur à 0.1%, de préférence supérieur à 0.5%.

7. Procédé selon l'une quelconque des revendications précédentes, dans lequel le contact entre les flux d'alimentation F0 et de recirculation F2 et les gaz de combustion G1 à l'étape (d) s'effectue à co-courant ou à contre-courant, de préférence à co-courant en s'écoulant depuis une partie supérieure vers un partie inférieure du contacteur gaz-acide.

8. Procédé selon l'une quelconque des revendications précédentes, dans lequel au cours de l'étape (d) de contact, un rapport (Qg1 / (Q0+Q2)) entre un débit massique Qg1 du gaz de combustion G1 introduit dans le contacteur gaz-acide (1) et un débit massique total (Q0 + Q2) des flux d'alimentation F0 et de recirculation F2 introduits dans le contacteur gaz-acide (1), est compris entre 0.1 et 50%, de préférence entre 0.5 et 10%, encore de préférence entre 1 et 7%.

9. Procédé selon l'une quelconque des revendications précédentes, dans lequel la solution d'acide polyphosphorique P3 comprend une valeur d'équivalents en unités de P₂O₅ plus élevée que celle de la solution d'acide phosphorique enrichi P1, et est supérieure à 76%, de préférence supérieure à 80%, particulièrement de préférence supérieur à 88%, ou est de préférence comprise entre 76 et 90%, encore de préférence entre 86 et 88%.

10. Dispositif de production d'acide polyphosphorique P3 suivant un procédé selon l'une quelconque des revendications précédentes, comprenant :
(A) une chambre de combustion (2) présentant :
• une entrée d'acide phosphorique enrichi (2pu) dans la chambre de combustion permettant l'introduction d'une solution d'acide phosphorique enrichi P1 sous forme pulvérisée dans,
• une unité de combustion (2c) agencée dans la partie supérieure de la chambre de combustion, et capable de former une flamme ayant une température d'au moins 1500°C par combustion d'un combustible, ladite unité de combustion comprenant :
∘ un brûleur,
∘ des connexions fluidiques entre le brûleur et, d'une part, une source d'oxygène et, d'autre part, une source de combustible (10) permettant d'alimenter la flamme,
• une sortie d'acide polyphosphorique (2pd) de la chambre de combustion pour récupérer une phase liquide, et agencée en aval de l'unité de combustion qui est elle-même agencée en aval de l'entrée d'acide phosphorique enrichi (2pu),
• une sortie d'évacuation de gaz de combustion G1 issu de la flamme
(B) un contacteur gaz-acide (1) présentant
• une entrée d'alimentation (1pu) reliée à une source d'une solution d'alimentation d'acide phosphorique P0, permettant l'introduction à un débit d'alimentation Q0 d'une solution d'alimentation d'acide phosphorique P0,
• une entrée de gaz de combustion (1gu) permettant l'introduction dans le contacteur gaz-acide des gaz de combustion G1 à un débit Qg1,
• une entrée de recirculation (1pru) identique ou différente de l'entrée d'alimentation (1pu), permettant l'introduction d'une solution d'acide phosphorique enrichi recirculé P2 à un débit de recirculation Q2,
• les entrées d'alimentation (1pu) et/ou de recirculation (1pru) et l'entrée de gaz (1gu) étant agencées pour permettre, d'une part,
∘ un contact entre le flux d'alimentation F0 et flux de recirculation F2 pour former un flux d'un mélange de la solution d'alimentation d'acide phosphorique P0 et de la solution d'acide phosphorique enrichi recirculé P2 et, d'autre part
∘ un contact du mélange ainsi formé avec les gaz de combustion G1,
• une ou plusieurs sorties d'acide phosphorique enrichi (1 pd),
(C) une connexion fluidique (6) de gaz de combustion reliant une extrémité (6u) couplée à la sortie d'évacuation des gaz de combustion de la chambre de combustion (2), à une extrémité (6d) couplée à l'entrée de gaz de combustion (1gu) dans le contacteur gaz-acide (1),
(D) une première connexion fluidique de pulvérisation (3p) reliant une extrémité amont (3u) couplée
• à la sortie d'acide phosphorique enrichi (1pd) du contacteur gaz acide (1) ou
• à un point d'embranchement (5) avec une première connexion fluidique (3) qui est couplée à la sortie d'acide phosphorique enrichi (1pd),
à une extrémité avale (3d) couplée à l'entrée d'acide phosphorique enrichi (2pu) dans la chambre de combustion (2) **Caractérisé en ce que** le dispositif comprend en outre
(E) une connexion fluidique de recirculation (3r) reliant une extrémité amont couplée,
• à une sortie d'acide phosphorique enrichi recirculé (1prd) du contacteur gaz-acide (1) ou
• à un point d'embranchement (5) avec la première connexion fluidique (3),
à une extrémité avale (3r) couplée,
• à l'entrée de recirculation (1pru ou 1pu) du contacteur gaz-acide (1) ou
• à une connexion d'alimentation (3a) alimentant le contacteur gaz-acide en solution d'alimentation d'acide phosphorique P0, et
(F) des moyens pour contrôler et maintenir un rapport, Q1 / (Q1 + Q2), entre un débit massique de pulvérisation Q1 s'écoulant dans la connexion fluidique de pulvérisation (3p) et un débit massique total (Q1 + Q2) défini comme la somme du débit massique de pulvérisation Q1 et d'un débit massique de recirculation Q2 s'écoulant dans la connexion fluidique de recirculation (3r) à une valeur inférieure à 50%, de préférence inférieure à 10%, de préférence inférieure à 5%, encore de préférence inférieure à 2.5% et dans lequel le rapport Q1 / (Q1 + Q2) a une valeur supérieure à 0.1%, de préférence supérieure à 0.5%.

11. Dispositif selon la revendication 10, dans lequel l'extrémité amont de la connexion fluidique de recirculation (3r) est couplée à une sortie d'acide phosphorique enrichi recirculé (1rd) du contacteur gaz-acide (1), et dans lequel les moyens pour contrôler et maintenir le rapport, Q1 / (Q1 + Q2) incluent une pompe (4) agencée sur la connexion fluidique de pulvérisation (3p) et ayant une capacité de pompage d'un liquide à un débit de pulvérisation Q1 et une pompe de recirculation (4r) agencée sur la connexion fluidique de recirculation (3r) et ayant une capacité de pompage d'un liquide à un débit de recirculation Q2.

12. Dispositif selon la revendication 10, dans lequel les extrémités amont des connexions fluidiques de pulvérisation (3p) et de recirculation (3r) sont couplées à un point d'embranchement (5) avec la première connexion fluidique (3), et dans lequel les moyens pour contrôler et maintenir le rapport, Q1 / (Q1 + Q2) incluent :
• une pompe (4) agencée sur la connexion fluidique de pulvérisation (3p) et ayant une capacité de pompage d'un liquide à un débit de pulvérisation Q1 et une pompe de recirculation (4r) agencée sur la connexion fluidique de recirculation (3r) et ayant une capacité de pompage d'un liquide à un débit de recirculation Q2, ou
• une pompe (4) agencée sur la première connexion fluidique (3) et ayant une capacité de pompage d'un liquide à un débit principal (Q2 + Q1) et une vanne à trois voies (5v) agencée au point d'embranchement (5) et permettant de diviser le débit principal en un débit de pulvérisation Q1 vers la connexion fluidique de pulvérisation (3p) et en un débit de recirculation Q2 vers la connexion fluidique de recirculation (3r), ou
• une pompe (4) agencée sur la première connexion fluidique (3) et ayant une capacité de pompage d'un liquide à un débit principal (Q2 + Q1) et des tuyauteries formant les connexions fluidiques de pulvérisation (3p) et de recirculation (3r) situées en aval du point d'embranchement (5) et dimensionnées de sorte à obtenir le rapport Q1 / (Q1 + Q2) désiré.

## Patentansprüche

1. Verfahren zur Herstellung von Polyphosphorsäure P3, das die folgenden Schritte umfasst:
(a) Einleiten eines Zuführungsstroms F0 aus Phosphorsäurezuführungslösung P0, der mindestens 40 Äquiv.-% an P₂O₅-Einheiten umfasst, in einen Gas-Säure-Kontaktor (1),
(b) Einleiten eines Rezirkulationsstroms F2 aus einer Lösung aus rezirkulierter angereicherter Phosphorsäure P2 in den Gas-Säure-Kontaktor (1),
(c) Einleiten der Verbrennungsgase G1 in den Gas-Säure-Kontaktor (1);
(d) Kontaktieren der Zuführungs- F0 und Rezirkulationsströme F2 und der Verbrennungsgase G1, um zum einen eine Lösung aus angereicherter Phosphorsäure P1 und zum anderen kontaktierte Verbrennungsgase G3 zu bilden,
• Trennen der kontaktierten Verbrennungsgase G3 von der Lösung aus angereicherter Phosphorsäure P1,
• Abführen der kontaktierten Verbrennungsgase G3 aus dem Gas-Säure-Kontaktor (1) und
• Herausleiten der Lösung aus angereicherter Phosphorsäure P1 aus dem Gas-Säure-Kontaktor (1),
(e) Bilden, ausgehend von der Lösung aus angereicherter Phosphorsäure P1, zum einen
• eines Rezirkulationsstroms F2 aus einer Lösung aus rezirkulierter angereicherter Phosphorsäure P2, um ihn wie im Schritt (b) definiert in den Gas-Säure-Kontaktor (1) einzuleiten, und zum anderen
• eines Zerstäubungsstroms F1 aus der Lösung aus angereicherter Phosphorsäure P1, um ihn in eine Verbrennungskammer (2) einzuleiten,
(f) Zerstäuben der Lösung aus angereicherter Phosphorsäure P1 durch eine im oberen Teil der Verbrennungskammer (2) brennende Flamme hindurch, um:
• Wasser zu verdampfen und die Lösung aus angereicherter Phosphorsäure P1 so zu konzentrieren,
• die Lösung aus angereicherter Phosphorsäure zu polymerisieren, um Polyphosphorsäure P3 zu bilden, und
• Verbrennungsgase G1 zu bilden,
(g) Trennen der Polyphosphorsäurelösung P3 von den Verbrennungsgasen G1 und
• Rückgewinnen der Polyphosphorsäurelösung P3 und
• Weiterleiten der Verbrennungsgase G1 in den Gas-Säure-Kontaktor (1) wie im Schritt (c) definiert.

2. Verfahren nach Anspruch 1, bei dem die Phosphorsäurezuführungslösung P0 mindestens 50 %, bevorzugt mindestens 54 %, noch bevorzugter mindestens 58 % oder sogar mindestens 60 % P₂O₅ umfasst.

3. Verfahren nach Anspruch 1 oder 2, bei dem die Zuführungs- F0 und Rezirkulationsströme F2 vor ihrer Einleitung in den Gas-Säure-Kontaktor gemischt werden, um einen Strom aus einem Gemisch aus der Phosphorsäurezuführungslösung P0 und der Lösung aus rezirkulierter angereicherter Phosphorsäure P2 zu bilden.

4. Verfahren nach Anspruch 1 oder 2, bei dem die Zuführungs- F0 und Rezirkulationsströme F2 kontaktiert werden, nachdem sie getrennt in den Gas-Säure-Kontaktor eingeleitet wurden, um einen Strom aus einem Gemisch aus der Phosphorsäurezuführungslösung P0 und der Lösung aus rezirkulierter angereicherter Phosphorsäure P2 zu bilden.

5. Verfahren nach einem der vorhergehenden Ansprüche, bei dem die Lösung aus angereicherter Phosphorsäure P1 und die Lösung aus rezirkulierter angereicherter Phosphorsäure P2 identisch sind und einen Wert für das Äquivalent an P₂O₅-Einheiten umfassen, der größer als der der Phosphorsäurezuführungslösung P0 ist und größer oder gleich 50 %, bevorzugt größer oder gleich 54 %, noch bevorzugter größer als 62 %, bevorzugt größer als 70 % ist und noch bevorzugter zwischen 71 und 80 % und bevorzugt zwischen 72 und 76 % beträgt.

6. Verfahren nach einem der vorhergehenden Ansprüche, bei dem, in einem stationären Produktionszustand, ein Verhältnis Q1 / (Q1 + Q2) zwischen einem Massendurchsatz Q1 des Zerstäubungsstroms F1 und einem Gesamtmassendurchsatz (Q1 + Q2) der Summe der Zerstäubungs- F1 und Rezirkulationsströme F2 kleiner als 50 %, bevorzugt kleiner als 10 %, bevorzugt kleiner als 5 %, noch bevorzugter kleiner als 2,5 % ist und bei dem das Verhältnis Q1 / (Q1 + Q2) größer als 0,1 %, bevorzugt größer als 0,5 % ist.

7. Verfahren nach einem der vorhergehenden Ansprüche, bei dem der Kontakt zwischen den Zuführungs- F0 und Rezirkulationsströmen F2 und den Verbrennungsgasen G1 im Schritt (d) im Gleichstrom oder im Gegenstrom erfolgt, bevorzugt im Gleichstrom, wobei sie von einem oberen Teil zu einem unteren Teil des Gas-Säure-Kontaktors fließen.

8. Verfahren nach einem der vorhergehenden Ansprüche, bei dem während des Kontaktschritts (d) ein Verhältnis (Qg1 / (Q0 + Q2)) zwischen einem Massendurchsatz Qg1 des in den Gas-Säure-Kontaktor (1) eingeleiteten Verbrennungsgases G1 und einem Gesamtmassendurchsatz (Q0 + Q2) der in den Gas-Säure-Kontaktor (1) eingeleiteten Zuführungs- F0 und Rezirkulationsströme F2 zwischen 0,1 und 50 %, bevorzugt zwischen 0,5 und 10 %, noch bevorzugter zwischen 1 und 7 % beträgt.

9. Verfahren nach einem der vorhergehenden Ansprüche, bei dem die Polyphosphorsäurelösung P3 einen Wert für das Äquivalent an P₂O₅-Einheiten umfasst, der größer als der der Lösung aus angereicherter Polyphosphorsäure P1 ist und größer als 76 %, bevorzugt größer als 80 %, besonders bevorzugt größer als 88 % ist oder bevorzugt zwischen 76 und 90 %, noch bevorzugter zwischen 86 und 88 % beträgt.

10. Vorrichtung zur Herstellung von Polyphosphorsäure P3 nach einem Verfahren nach einem der vorhergehenden Ansprüche, umfassend:
(A) eine Verbrennungskammer (2), die aufweist:
• einen Einlass für angereicherte Phosphorsäure (2pu) in die Verbrennungskammer, der das Einleiten einer Lösung aus angereicherter Phosphorsäure P1 in zerstäubter Form in
• eine Verbrennungseinheit (2c) ermöglicht, die im oberen Teil der Verbrennungskammer angeordnet ist und in der Lage ist, durch Verbrennen eines Brennstoffs eine Flamme mit einer Temperatur von mindestens 1500 °C zu bilden, wobei die Verbrennungseinheit umfasst:
∘ einen Brenner,
∘ Fluidverbindungen zwischen dem Brenner und zum einen einer Sauerstoffquelle und zum anderen einer Brennstoffquelle (10), die es ermöglichen, die Flamme zu versorgen,
• einen Auslass für Polyphosphorsäure (2pd) aus der Verbrennungskammer zum Zurückgewinnen einer flüssigen Phase, der stromab der Verbrennungseinheit angeordnet ist, die wiederum stromab des Einlasses für angereicherte Phosphorsäure (2pu) angeordnet ist,
• einen Auslass zum Abführen von aus der Flamme hervorgehendem Verbrennungsgas G1,
(B) einen Gas-Säure-Kontaktor (1), der aufweist:
• einen Zuführungseinlass (1pu), der mit einer Versorgungsquelle für eine Phosphorsäurezuführungslösung P0 verbunden ist und das Einleiten einer Phosphorsäurezuführungslösung P0 mit einem Zuführungsdurchsatz Q0 ermöglicht,
• einen Einlass für Verbrennungsgas (1gu), der das Einleiten der Verbrennungsgase G1 mit einem Durchsatz Qg1 in den Gas-Säure-Kontaktor ermöglicht,
• einen Rezirkulationseinlass (lpru), der identisch mit dem oder verschieden vom Zuführungseinlass (1pu) ist und das Einleiten einer Lösung aus rezirkulierter angereicherter Phosphorsäure P2 mit einem Rezirkulationsdurchsatz Q2 ermöglicht,
• wobei die Zuführungs- (1pu) und/oder Rekzirkulationseinlässe (1pru) und der Gaseinlass (1gu) so angeordnet sind, dass sie zum einen ermöglichen
∘ einen Kontakt zwischen dem Zuführungsstrom F0 und dem Rezirkulationsstrom F2, um einen Strom aus einem Gemisch aus der Phosphorsäurezuführungslösung P0 und der Lösung aus rezirkulierter angereicherter Phosphorsäure P2 zu bilden, und zum anderen
∘ einen Kontakt des so gebildeten Gemisches mit den Verbrennungsgasen G1,
• einen oder mehrere Auslässe für angereicherte Phosphorsäure (1pd),
(C) eine Fluidverbindung (6) für Verbrennungsgase, die ein mit dem Auslass zum Abführen der Verbrennungsgase aus der Verbrennungskammer (2) gekoppeltes Ende (6u) mit einem mit dem Einlass für Verbrennungsgase (1gu) in den Gas-Säure-Kontaktor (1) gekoppelten Ende (6d) verbindet,
(D) eine erste Zerstäubungsfluidverbindung (3p) zum Verbinden eines stromaufwärtigen Endes (3u), das gekoppelt ist
• mit dem Auslass für angereicherte Phosphorsäure (1pd) des Gas-Säure-Kontaktors (1) oder
• mit einem Anschlusspunkt (5) mit einer ersten Fluidverbindung (3), die mit dem Auslass für angereicherte Phosphorsäure (1pd) gekoppelt ist, mit einem stromabwärtigen Ende (3d), das mit dem Einlass für angereicherte Phosphorsäure (2pu) in die Verbrennungskammer (2) gekoppelt ist,
**dadurch gekennzeichnet, dass** die Vorrichtung ferner umfasst
(E) eine Rezirkulationsfluidverbindung (3r) zum Verbinden eines stromaufwärtigen Endes, das gekoppelt ist
• mit einem Auslass für rezirkulierte angereicherte Phosphorsäure (1prd) des Gas-Säure-Kontaktors (1) oder
• mit einem Anschlusspunkt (5) mit der ersten Fluidverbindung (3)
mit einem stromaufwärtigen Ende (3r), das gekoppelt ist
• mit dem Rezirkulationseinlass (1pru oder 1pu) des Gas-Säure-Kontaktors (1) oder
• mit einer Zuführungsverbindung (3a), die dem Gas-Säure-Kontaktor Phosphorsäurezuführungslösung P0 zuführt, und
(F) Mittel zum Kontrollieren und Halten eines Verhältnisses Q1 / (Q1 + Q2) zwischen einem Zerstäubungsmassendurchsatz Q1, der in der Zerstäubungsfluidverbindung (3p) fließt, und einem Gesamtmassendurchsatz (Q1 + Q2), definiert als die Summe aus dem Zerstäubungsmassendurchsatz Q1 und einem Rezirkulationsmassendurchsatz Q2, der in der Rezirkulationsfluidverbindung (3r) fließt, auf einem Wert kleiner als 50 %, bevorzugt kleiner als 10 %, bevorzugt kleiner als 5 %, noch bevorzugter kleiner als 2,5 %, und wobei das Verhältnis Q1 / (Q1 + Q2) einen Wert größer als 0,1 %, bevorzugt größer als 0,5 % hat.

11. Vorrichtung nach Anspruch 10, bei der das stromaufwärtige Ende der Rezirkulationsfluidverbindung (3r) mit einem Auslass für rezirkulierte angereicherte Phosphorsäure (1rd) des Gas-Säure-Kontaktors (1) gekoppelt ist und bei der die Mittel zum Kontrollieren und Halten des Verhältnisses Q1 / (Q1 + Q2) eine Pumpe (4) beinhalten, die an der Zerstäubungsfluidverbindung (3p) angeordnet ist und eine Kapazität zum Pumpen einer Flüssigkeit mit einem Zerstäubungsdurchsatz Q1 hat, und eine Rezirkulationspumpe (4r), die an der Rezirkulationsfluidverbindung (3r) angeordnet ist und eine Kapazität zum Pumpen einer Flüssigkeit mit einem Rezirkulationsdurchsatz Q2 hat.

12. Vorrichtung nach Anspruch 10, bei der die stromaufwärtigen Enden der Zerstäubungs- (3p) und Rezirkulationsfluidverbindungen (3r) in einem Anschlusspunkt (5) mit der ersten Fluidverbindung (3) gekoppelt sind und bei der die Mittel zum Kontrollieren und Halten des Verhältnisses Q1 / (Q1 + Q2) beinhalten:
• eine Pumpe (4), die an der Zerstäubungsfluidverbindung (3p) angeordnet ist und eine Kapazität zum Pumpen einer Flüssigkeit mit einem Zerstäubungsdurchsatz Q1 hat, und eine Rezirkulationspumpe (4r), die an der Rezirkulationsfluidverbindung (3r) angeordnet ist und eine Kapazität zum Pumpen einer Flüssigkeit mit einem Rezirkulationsdurchsatz Q2 hat, oder
• eine Pumpe (4), die an der ersten Fluidverbindung (3) angeordnet ist und eine Kapazität zum Pumpen einer Flüssigkeit mit einem Hauptdurchsatz (Q2 + Q1) hat, und ein Dreiwegeventil (5v), das im Anschlusspunkt (5) angeordnet ist, und es ermöglicht, den Hauptdurchsatz in einem Zerstäubungsdurchsatz Q1 zur Zerstäubungsfluidverbindung (3p) hin und in einen Rezirkulationsdurchsatz Q2 zur Rezirkulationsfluidverbindung (3r) hin zu teilen, oder
• eine Pumpe (4), die an der ersten Fluidverbindung (3) angeordnet ist und eine Kapazität zum Pumpen einer Flüssigkeit mit einem Hauptdurchsatz (Q2 + Q1) hat, und Rohrleitungen, die die Zerstäubungs- (3p) und Rezirkulationsfluidverbindungen (3r) bilden, die stromab des Anschlusspunktes (5) angeordnet sind und so ausgelegt sind, dass das gewünschte Verhältnis Q1 / (Q1 + Q2) erhalten wird.

## Claims

1. Process for producing polyphosphoric acid P3 comprising the following steps:
(a) introducing, into a gas/acid contactor (1), a feed stream F0 of a phosphoric acid feed solution P0 and comprising at least 40% equivalent in P₂O₅ units,
(b) introducing, into the gas/acid contactor (1), a recirculation stream F2 of recirculated enriched phosphoric acid solution P2,
(c) introducing, into the gas/acid contactor (1), combustion gases G1,
(d) bringing into contact the feed stream F0, the recirculation stream F2 and the combustion gases G1, in order to form, on the one hand, an enriched phosphoric acid solution P1 and, on the other hand, contacted combustion gases G3,
• separating the contacted combustion gases G3 from the enriched phosphoric acid solution P1,
• discharging the contacted combustion gases G3 from the gas/acid contactor (1), and
• taking the enriched phosphoric acid solution P1 out of the gas/acid contactor (1),
(e) forming, from said enriched phosphoric acid solution P1, on the one hand,
• a recirculation stream F2 of recirculated enriched phosphoric acid solution P2, in order to introduce it into the gas/acid contactor (1) as defined in step (b) and, on the other hand,
• a spray stream F1 of the enriched phosphoric acid solution P1, in order to introduce it into a combustion chamber (2),
(f) spraying the enriched phosphoric acid solution P1 through a burning flame in the upper part of the combustion chamber (2) in order:
• to evaporate water and thus to concentrate the enriched phosphoric acid solution P1,
• to polymerize the enriched phosphoric acid solution in order to form polyphosphoric acid P3 and
• to form combustion gases G1,
(g) separating the polyphosphoric acid solution P3 from the combustion gases G1 and
• recovering the polyphosphoric acid solution P3, and
• transferring the combustion gases G1 into the gas/acid contactor (1) as defined in step (c).

2. Process according to Claim 1, in which the phosphoric acid feed solution P0 comprises at least 50%, preferably at least 54%, more preferably at least 58% or even at least 60% P₂O₅.

3. Process according to Claim 1 or 2, in which the feed stream F0 and the recirculation stream F2 are mixed before they are introduced into the gas/acid contactor, in order to form a stream of a mixture of the phosphoric acid feed solution P0 and of the recirculated enriched phosphoric acid solution P2.

4. Process according to Claim 1 or 2, in which the feed stream F0 and the recirculation stream F2 are brought into contact after having been introduced separately into the gas/acid contactor, in order to form a stream of a mixture of the phosphoric acid feed solution P0 and of the recirculated enriched phosphoric acid solution P2.

5. Process according to any one of the preceding claims, in which the enriched phosphoric acid solution P1 and the recirculated enriched phosphoric acid solution P2 are identical and comprise a value of equivalents of P₂O₅ units higher than that of the phosphoric acid feed solution P0, and is greater than or equal to 50%, preferably greater than or equal to 54%, more preferably greater than 62%, preferably greater than 70%, and more preferably between 71% and 80%, and preferably between 72% and 76%.

6. Process according to any one of the preceding claims, in which, in a stationary production state, a ratio, Q1 / (Q1 + Q2), between a mass flow rate Q1 of the spray stream F1 and a total mass flow rate (Q1 + Q2) of the sum of the spray stream F1 and of the recirculation stream F2 is less than 50%, preferably less than 10%, preferably less than 5%, more preferably less than 2.5% and in which the Q1 / (Q1 + Q2) ratio is greater than 0.1%, preferably greater than 0.5%.

7. Process according to any one of the preceding claims, in which the contact between the feed stream F0, the recirculation stream F2 and the combustion gases G1 in step (d) is carried out cocurrently or countercurrently, preferably cocurrently by flowing from an upper part towards a lower part of the gas/acid contactor.

8. Process according to any one of the preceding claims, in which, during the contacting step (d), a ratio (Qg1 / (Q0 + Q2)) between a mass flow rate Qg1 of the combustion gas G1 introduced into the gas/acid contactor (1) and a total mass flow rate (Q0 + Q2) of the feed stream F0 and the recirculation stream F2 introduced into the gas/acid contactor (1) is between 0.1% and 50%, preferably between 0.5% and 10%, more preferably between 1% and 7%.

9. Process according to any one of the preceding claims, in which the polyphosphoric acid solution P3 comprises a value of equivalents of P₂O₅ units higher than that of the enriched phosphoric acid solution P1, and is greater than 76%, preferably greater than 80%, particularly preferably greater than 88%, or is preferably between 76% and 90%, more preferably between 86% and 88%.

10. Device for producing polyphosphoric acid P3 following a process according to any one of the preceding claims, comprising:
(A) a combustion chamber (2) having:
• an enriched phosphoric acid inlet (2pu) into the combustion chamber, enabling the introduction of an enriched phosphoric acid solution P1 in sprayed form into
• a combustion unit (2c) arranged in the upper part of the combustion chamber, and capable of forming a flame having a temperature of at least 1500°C by combustion of a fuel, said combustion unit comprising:
∘ a burner,
∘ fluid connections between the burner and, on the one hand, a source of oxygen and, on the other hand, a source of fuel (10) making it possible to feed the flame,
• a polyphosphoric acid outlet (2pd) from the combustion chamber in order to recover a liquid phase, and arranged downstream of the combustion unit, which is itself arranged downstream of the enriched phosphoric acid inlet (2pu),
• a discharge outlet for combustion gas G1 resulting from the flame,
(B) a gas/acid contactor (1) having
• a feed inlet (1pu) connected to a source of a phosphoric acid feed solution P0, enabling the introduction, at a feed flow rate Q0, of a phosphoric acid feed solution P0,
• a combustion gas inlet (1gu) enabling the introduction, into the gas/acid contactor, of the combustion gases G1 at a flow rate Qg1,
• a recirculation inlet (1pru) identical to or different from the feed inlet (1pu), enabling the introduction of a recirculated enriched phosphoric acid solution P2 at a recirculation flow rate Q2,
• the feed inlet (1pu) and/or the recirculation inlet (1pru) and the gas inlet (1gu) being arranged in order to enable, on the one hand,
∘ contact between the feed stream F0 and recirculation stream F2 in order to form a stream of a mixture of the phosphoric acid feed solution P0 and of the recirculated enriched phosphoric acid solution P2 and, on the other hand,
∘ contact of the mixture thus formed with the combustion gases G1,
• one or more enriched phosphoric acid outlets (1pd),
(C) a combustion gas fluid connection (6) linking one end (6u), coupled to the outlet for discharging combustion gases from the combustion chamber (2), to an end (6d) coupled to the combustion gas inlet (1gu) into the gas/acid contactor (1),
(D) a first spray fluid connection (3p) linking an upstream end (3u), coupled
• to the enriched phosphoric acid outlet (1pd) from the gas/acid contactor (1) or
• to a branch point (5) with a first fluid connection (3) which is coupled to the enriched phosphoric acid outlet (1pd), to a downstream end (3d) coupled to the
enriched phosphoric acid inlet (2pu) into the combustion chamber (2),
**characterized in that** the device further comprises
(E) a recirculation fluid connection (3r) linking an upstream end, coupled,
• to a recirculated enriched phosphoric acid outlet (1rd) of the gas/acid contactor (1) or
• to a branch point (5) with the first fluid connection (3),
to a downstream end (3r) coupled,
• to the recirculation inlet (1pru or 1pu) of the gas/acid contactor (1) or
• to a feed connection (3a) feeding the gas/acid contactor with phosphoric acid feed solution P0, and
(F) means for controlling and maintaining a ratio, Q1 / (Q1 + Q2), between a spray mass flow rate Q1 flowing in the spray fluid connection (3p) and a total mass flow rate (Q1 + Q2) defined as the sum of the spray mass flow rate Q1 and of a recirculation mass flow rate Q2 flowing in the recirculation fluid connection (3r), at a value of less than 50%, preferably less than 10%, preferably less than 5%, more preferably less than 2.5%, and in which the Q1 / (Q1 + Q2) ratio has a value of greater than 0.1%, preferably of greater than 0.5%.

11. Device according to Claim 10, in which the upstream end of the recirculation fluid connection (3r) is coupled to a recirculated enriched phosphoric acid outlet (1rd) of the gas/acid contactor (1), and in which the means for controlling and maintaining the ratio, Q1 / (Q1 + Q2), include a pump (4) arranged on the spray fluid connection (3p) and having a capacity for pumping a liquid at a spray flow rate Q1 and a recirculation pump (4r) arranged on the recirculation fluid connection (3r) and having a capacity for pumping a liquid at a recirculation flow rate Q2.

12. Device according to Claim 10, in which the upstream ends of the spray fluid connection (3p) and of the recirculation fluid connection (3r) are coupled to a branch point (5) with the first fluid connection (3), and in which the means for controlling and maintaining the ratio, Q1 / (Q1 + Q2), include:
• a pump (4) arranged on the spray fluid connection (3p) and having a capacity for pumping a liquid at a spray flow rate Q1 and a recirculation pump (4r) arranged on the recirculation fluid connection (3r) and having a capacity for pumping a liquid at a recirculation flow rate Q2, or
• a pump (4) arranged on the first fluid connection (3) and having a capacity for pumping a liquid at a main flow rate (Q2 + Q1) and a three-way valve (5v) arranged at the branch point (5) and making it possible to split the main flow rate into a spray flow rate Q1 towards the spray fluid connection (3p) and into a recirculation flow rate Q2 towards the recirculation fluid connection (3r), or
• a pump (4) arranged on the first fluid connection (3) and having a capacity for pumping a liquid at a main flow rate (Q2 + Q1) and pipes forming the spray fluid connection (3p) and recirculation fluid connection (3r) that are located downstream of the branch point (5) and are sized so as to obtain the desired Q1 / (Q1 + Q2) ratio.
